# EUROPEAN PATENT SPECIFICATION

(11) **EP 4 399 052 B1**
(45) Date of publication and mention of the grant of the patent: **23.09.2026**
(21) Application number: 22782863.9
(22) Date of filing: 09.09.2022
(51) Int. Cl.: B24B 27/00, B24B 19/26, B24B 49/16, B24B 49/10, B24B 49/12, B24B 51/00, H02K 41/00

(54) **METHOD AND APPARATUS FOR SURFACE PROCESSING**
VERFAHREN UND VORRICHTUNG ZUR OBERFLÄCHENBEARBEITUNG
PROCÉDÉ ET APPAREIL DE TRAITEMENT DE SURFACE

(30) Priority: 09.09.2021 FI 20215948
(43) Date of publication of application: 17.07.2024
(73) Proprietor: Mirka Ltd, 66850 Jepua (FI)
(72) Inventor: KAHARI, Jani, 66900 Nykarleby (FI); HÄGGBLOM, Mikael, 65100 Vasa (FI)
(74) Representative: Berggren Oy
(86) International application number: PCT/EP2022/075052
(87) International publication number: WO 2023/036903

(56) References cited:
- WO-A1-2020/212552
- CN-U- 210 744 995
- ES-A1- 2 315 130
- US-A1- 2015 005 923

## Description

### FIELD

The present invention relates to surface processing. In particular, the present invention relates to surface processing by using an abrading device.

### BACKGROUND

From US 2015/005923 A1 there is known a surface processing apparatus as defined in the preamble of claim 1.

A robot may be arranged to move a sanding machine, so as to process the surface of an object with the sanding machine. The sanding machine may apply a pressing force to the surface during the processing. Variation of the pressing force may have an adverse effect on the final surface quality of the processed surface.

It is known that a pneumatic cushion element may be positioned between the robot and the sanding machine, so as to reduce variations of the pressing force.

### SUMMARY

An object is to provide an apparatus for processing a surface. An object is to provide a method for processing a surface.

According to an aspect, there is provide an apparatus according to claim 1.

Further aspects are defined in the other claims.

The scope of protection sought for various embodiments of the invention is set out by the independent claims. The embodiments, if any, described in this specification that do not fall under the scope of the independent claims are to be interpreted as examples useful for understanding various embodiments of the invention.

The surface processing apparatus may be arranged to process a surface of an object by pressing a processing element (ABR1) against the surface with a pressing force. The apparatus may comprise a processing device to cause rotational and/or oscillatory motion of the processing element when the processing element is in contact with the surface. The surface processing apparatus may comprise a manipulating robot to move the processing device with respect to the surface. The apparatus may be arranged to perform finishing of the surface of the object. The processing device may be arranged to finish the surface e.g. by abrading material away from the surface. The processing device may be e.g. an orbital or rotary sander. The processing element (ABR1) may be e.g. an abrasive element.

The surface processing apparatus may comprise an electromagnetic actuator to enable fast control the pressing force of the processing device. The electromagnetic actuator may enable compressive compliance between the processing device and the surface of the object.

The surface processing apparatus may reduce or avoid problems caused by discrepancies between the actual shape of the surface of the processed object and the programmed path of the robot. For example, an automobile factory may process thousands of car bodies each day, wherein each car body may have complex surfaces. The shapes of the car parts typically exhibit individual variations due to manufacturing tolerances.

As a comparative example, a rigid connection between the surface processing tool and the robot would cause huge differences between actual pressing forces and target values.

Using the electromagnetic actuator between the robot and the surface processing device may reduce the difference between the actual pressing force and the target value. The electromagnetic actuator may allow running the robot at a very high speed. The electromagnetic actuator may compensate the discrepancies quickly, allowing the robot to be run at high speeds while still allowing a good processing result.

In an embodiment, the electromagnetic actuator does not need generate a predetermined minimum magnetic force. The electromagnetic actuator also may be arranged to press the surface processing device against the surface with a very small pressing force. For example, the pressing force may be substantially smaller than the weight of the surface processing device. For example, the electromagnetic actuator may also generate a pulling force in order to provide a pressing force which is smaller than the weight of the surface processing device.

The control scheme of the apparatus may be based on two control loops. A first control loop may be arranged to maintain the pressing force substantially equal to a target value. A second control loop may be arranged to maintain the displacement of the actuator within a predetermined range.

Keeping the pressing force substantially constant may facilitate providing consistent surface quality of the processed surface.

The simple mechanism enabled by the electromagnetic action may allow a compact and cost-effective structure of the actuator. In particular, the actuator may be based on the use of a single-phase electromagnet and an array of permanent magnets. The permanent magnets may be arranged e.g. according to the Halbach array configuration.

The electromagnetic actuator comprises a stator and a mover. The stator may comprise an electromagnet for generating a magnetic field. The mover may comprise permanent magnets to generate an electromagnetic force by interacting with the magnetic field of the stator. The electromagnetic force may push or pull the mover depending on the magnitude and polarity of an electric current of the electromagnet. The mover may be arranged to move in an axial direction with respect to the stator.

The actuator may be attached between the robot and the surface processing device. For example, the stator may be attached to the robot, and the mover may be attached to the surface processing device. The electromagnetic linear actuator may be gearless and substantially frictionless. The mover may be mechanically coupled to the processing element via the processing device so that a translational movement of the mover in the axial direction causes the same translational movement of the processing element.

The operation of the apparatus may be controlled by using a first control loop and for controlling the pressing force (F_{SRF1}), and by using a second control loop to control a displacement (Δz_{M1}) of the mover with respect to the stator. The second control loop may allow using the actuator as a short stroke device. Using the actuator as the short stroke device may allow a simple compact structure, low moving mass, reduced electric losses, a high force-to-current ratio, low wear, and/or an increased lifetime. Furthermore, the generated electromagnetic force may be substantially constant and substantially independent of the displacement, in a situation where the electric current is kept constant, and the movements of the mover are confined to the predetermined short range.

The mover may move along a linear path with respect to the stator. The actuator may be e.g. axially symmetric with respect to the axis of the actuator. The permanent magnets of the mover may be arranged to constitute a tubular array. The actuator may be called e.g. as a single phase linear tubular permanent magnet actuator (SPLTPMA).

The actuator generates an electromagnetic force, which may be substantially proportional to the electric current of the stator coil. The electromagnetic force may be coupled via the surface processing device to the processed surface. Thus, the electric current and the electromagnetic force of the actuator may immediately contribute to the pressing force, which is exerted by the surface processing device to the processed surface. The electromagnetic force may be controlled by varying the current according to a reference set force, according to the displacement of the actuator, and according to the orientation of the surface processing device (with respect to the direction of gravity).

The pressing force is parallel with the axis of the actuator. The robot may be arranged to move the surface processing device so that the central axis of the actuator may be kept substantially parallel with the local surface normal (N1) of the processed surface.

The direction of the electromagnetic force may also be reversed by reversing the polarity of the electric current of the actuator. The direction of the electromagnetic force may be reversed e.g. in order to compensate the gravitational force (i.e. weight) of the surface processing device based on the orientation of the surface processing device. The actuator may also pull the surface processing device in the axial direction. The orientation of the surface processing device, with respect to the direction of gravity, may be determined e.g. by measuring the orientation with a sensor, and/or by determining the orientation of the surface processing device based on control data (e.g. S_{ROBO1}) of the robot.

The actuator may be arranged to generate a constant electromagnetic force for pushing or pulling the surface processing device. The magnitude of the electromagnetic force may be controlled substantially independently from the displacement of the actuator, by controlling the electric current of the actuator coil.

The fast (faster) force control loop may be arranged to keep the pressing force substantially equal to a target force value by rapidly adjusting the electric current of the actuator coil based on the measured force. The slow (slower) displacement control loop may be arranged to keep the displacement (offset) of the mover within a predetermined allowed range, by modifying the work path of the robot based on the measured displacement. Consequently, the actuator may be kept ready for optimal actuation at all times. The force control loop may keep the pressing force substantially equal to the target value during the processing. The displacement control loop may keep the displacement within an optimal working range during the processing.

The displacement control loop may communicate with the robot e.g. through a communication interface. The displacement control loop may be slower than the force control loop. A stabilization time period of the displacement control loop may be e.g. longer than 5 times the stabilization time period of the force control loop, e.g. in order to reduce or minimize possibly disturbing movements of the robot.

The force control loop may be arranged to control the pressing force e.g. by PID control. PID control means proportional-integral-derivative-control. The displacement control loop may be arranged to control the displacement e.g. by PID control.

There is also a possibility that the measured displacement is used to improve force maintenance through current-control, thus creating a direct link between the two loops. The force control loop may be arranged to control the force based on measured force and also based on the measured displacement.

The apparatus may be arranged to use a model of the processed surface. The model may specify e.g. an assumed or ideal shape of the processed surface. The model may be stored in a computer readable memory, as shape data, e.g. as a group of surface points. The apparatus may be arranged to move the robot based on the model of the surface, so as to move the surface processing device along an optimum path along the surface. The actual shape of the processed surface typically deviates from the model to some extent, i.e. there is a mismatch. For example, the actual surface may comprise a bump or a depression in a situation where the model indicates a flat surface. The bump or the depression would cause a sudden change of the pressing force if the surface processing device would be moved along a straight line. The electromagnetic actuator together with the two control loops may enable precise and instant reaction to a mismatch between the model and the actual shape of the processed surface, so that a substantially constant pressing force may be applied to the surface.

The electromagnetic actuator may enable generating a positive electromagnetic force, which pushes the processing device against the surface. The electromagnetic actuator may also enable generating a negative electromagnetic force, which pulls the processing device in the opposite direction away from the surface. The negative electromagnetic force may be used e.g. when the apparatus is arranged to keep the pressing force at a low value. The negative electromagnetic force may allow regulating the pressing force to a value, which is smaller than the weight of the surface processing device. The capability to generate a negative electromagnetic force may allow using all possible orientations of the surface processing device with respect to the direction of gravity. For example, the processed surface may be directly above or directly below the surface processing device.

### BRIEF DESCRIPTION OF THE DRAWINGS

In the following examples, several variations will be described in more detail with reference to the appended drawings, in which
- Fig. 1: shows, by way of example, a surface processing apparatus,
- Fig. 2: shows, by way of example, in a cross-sectional side view, an electromagnetic actuator,
- Fig. 3a: shows, by way of example, generated magnetic force as the function of displacement,
- Fig. 3b: shows, by way of example, an allowed movement range and a mechanically limited movement range,
- Fig. 4a: shows, by way of example, in a cross-sectional side view, a stator of the actuator,
- Fig. 4b: shows, by way of example, in a cross-sectional side view, a mover of the actuator,
- Fig. 5a: shows, by way of example, in a cross-sectional side view, the permanent magnets and the ferromagnetic core of the mover,
- Fig. 5b: shows, by way of example, in a cross-sectional side view, permanent magnets of a Halbach array,
- Fig. 6: shows, by way of example, in a sectioned three-dimensional view, the electromagnetic actuator,
- Fig. 7a: shows, by way of example, in a cross-sectional side view, the actuator, wherein the mover is in a retracted position,
- Fig. 7b: shows, by way of example, in a cross-sectional side view, the actuator, wherein the mover is in an extended position,
- Fig. 8a: shows, by way of example, the control system of the surface processing apparatus,
- Fig. 8b: shows, by way of example, the control system of the surface processing apparatus,
- Fig. 9: shows, by way of example, controlling the electromagnetic force by a fast control loop, and controlling position of the actuator by a slow control loop,
- Figs 10a to 10c: show, by way of example, in a side view, the effect of tilt angle of the actuator on the gravity force component,
- Fig. 11a: shows, by way of example, in a side view, processing an uneven surface by using the surface processing apparatus,
- Fig. 11b: shows, by way of example, temporal evolution of displacement in the situation of Fig. 11a,
- Fig. 11c: shows, by way of example, displacement, acceleration, sensor force, magnetic force, coil current, and pressing force in the situation of Fig. 11a,
- Fig. 11d: shows, by way of example, temporal evolution of the displacement in a situation where the robot moves the surface processing device over a sloping portion of the surface,
- Fig. 11e: shows, by way of example, temporal evolution of the pressing force in a situation where the surface processing device supported by the electromagnetic actuator hits the surface, and in a comparative situation where the surface processing device is supported by a pneumatic actuator,
- Fig. 11f: shows, by way of example, temporal evolution of the pressing force in a situation where the surface processing device supported by the electromagnetic actuator is brought into contact with the surface, and in a comparative situation where the surface processing device is supported by a pneumatic actuator,
- Fig. 11g: shows, by way of example, temporal evolution of the pressing force in a situation where the surface processing device supported by the electromagnetic actuator is brought into contact with the surface, and in a comparative situation where the surface processing device is supported by a pneumatic actuator,
- Fig. 12a: shows, by way of example, in a cross-sectional side view, a surface processing device, and
- Fig. 12b: shows, by way of example, additional features of the device of Fig. 12a.

### DETAILED DESCRIPTION

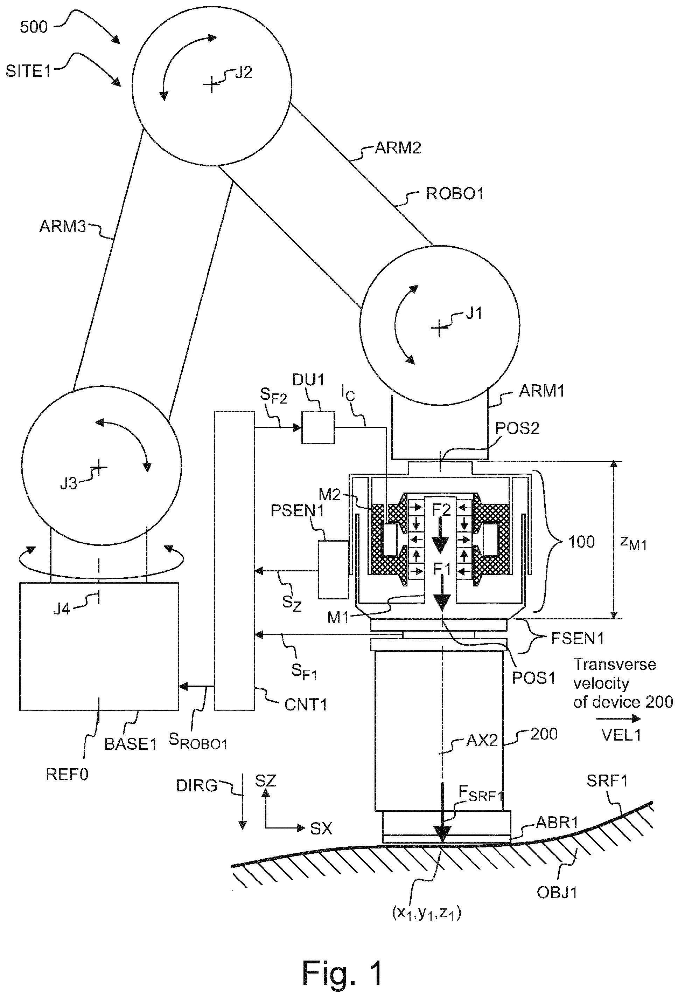

Fig. 1 shows, by way of example, an industrial surface processing apparatus 500, which comprises a surface processing device 200 and a manipulating robot ROBO1 to move the device 200 with respect to a surface SRF1 of an object OBJ1.

The surface SRF1 of the object OBJ may be processed by using the processing device 200. The robot ROBO1 may press the processing device 200 against the surface SRF1, and the robot ROBO1 may move the device 200 according to a set of instructions specified by a control signal S_{ROBO1}, so as to process the surface SRF1 in a desired manner. For example, the robot ROBO1 to move a processing element ABR1 of the device 200 along the surface SRF1 at a transverse velocity component VEL1. The robot ROBO1 may move the device 200 with respect to a surface SRF1 of an object when a processing element ABR1 of the device 200 is kept in contact with the surface SRF1. The processing device 200 may be used for processing a surface SRF1 at a processing site SITE1.

The surface processing device 200 may be a finishing tool. The processing device 200 may be e.g. electrically driven. The surface processing device 200 may be e.g. an abrading device. The processing element ABR1 may be e.g. an abrasive article. The abrading device 200 may be arranged to cause a rotary and/or oscillatory motion of an abrasive article ABR1 with respect to the surface SRF1, so as to abrade material away from the surface SRF1.

The processing element ABR1 may be pressed against the surface SRF1 with a pressing force F_{SRF1}. The apparatus 500 may be arranged to operate such that the pressing force F_{SRF1} is kept substantially equal to a predetermined target value F_{SRF1,TARG}. The target value F_{SRF1,TARG} of the pressing force F_{SRF1} may be selected e.g. in order to attain a desired surface quality of the surface SRF1, in order to optimize a rate of removal of material from the surface SRF1 and/or in order to optimize operating lifetime of the processing element ABR1.

The apparatus 500 may comprise an electromagnetic linear actuator 100 to generate a controlled actuator force F1. The actuator 100 may exert the actuator force F1 to the device 200.

The surface processing apparatus 500 may comprise:
- a surface processing device 200 to process a surface SRF1,
- a robot ROBO1 to move the surface processing device 200 with respect to the surface SRF1,
- an electromagnetic actuator 100 to electromagnetically apply an actuator force F1 to the surface processing device 200, so as to cause the surface processing device 200 to press against the surface SRF1 with a controlled pressing force F_{SRF1}, and
- a control unit CNT1 to control the pressing force F_{SRF1} by adjusting an electric current I_{C} of the electromagnetic actuator 100.

The length z_{M1} of the actuator 100 may vary during the surface processing, when the actuator 100 presses the surface processing device 200 against the surface with the controlled pressing force F_{SRF1}.

The apparatus 500 may comprise a force sensor FSEN1 for measuring the actuator force F1. The force sensor FSEN1 may be positioned e.g. between the actuator 100 and the surface processing device 200. Alternatively, the force sensor FSEN1 may be positioned between an arm ARM1 of the robot ROBO1 and the actuator 100.

The actuator 100 may be arranged to apply the actuator force F1 to the surface processing device 200 via the force sensor FSEN1. The force sensor F_{SEN1} may provide a force signal S_{F1} indicative of the actuator force F1. The force sensor F_{SEN1} may measure the actuator force F1.

The time-averaged value of the pressing force F_{SRF1} may depend on the actuator force F1. The pressing force F_{SRF1} may be controlled by adjusting the actuator force F1. On the other hand, a sudden change of the pressing force F_{SRF1} may cause a corresponding change of the actuator force F1. The change of the pressing force F_{SRF1} may be detected by monitoring the actuator force F1. The instantaneous actuator force F1(t) may depend on the instantaneous pressing force F_{SRF1}(t). The force sensor FSEN1 may form a force signal S_{F1}, which depends on the pressing force F_{SRF1}. The force sensor FSEN1 may form a force signal S_{F1}, which is indicative of the pressing force F_{SRF1}. The apparatus 500 may be arranged to keep the pressing force F_{SRF1} substantially equal to the predetermined target value F_{SRF1,TARG}, based on the force signal SF1.

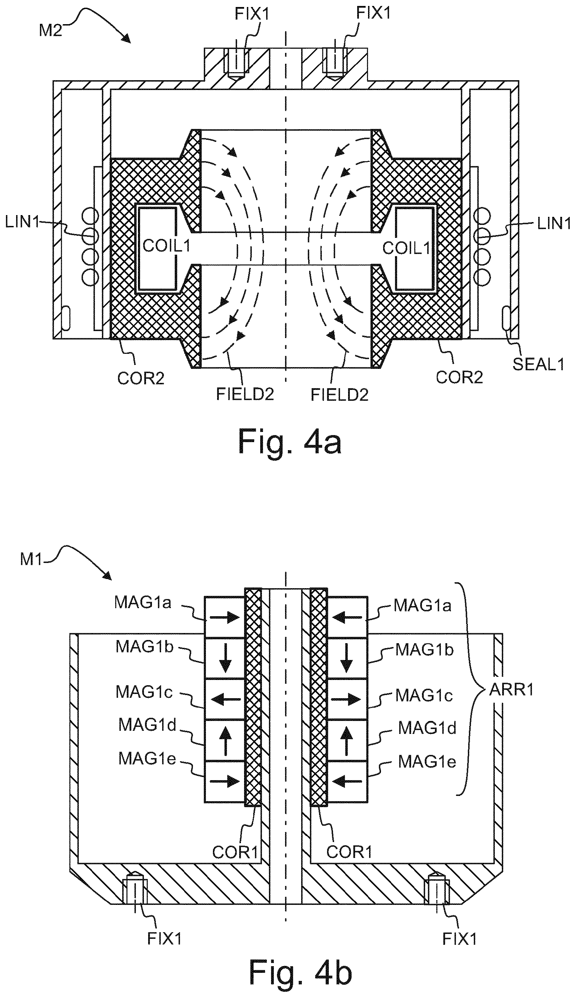

The electromagnetic actuator 100 may comprise a stator M2 and a mover M1. The mover M1 may be arranged to move with respect to the stator M2. The stator M2 may comprise a coil COIL1, which comprises several turns of an electric conductor. The coil COIL1 may generate a magnetic field FIELD2 by conducting electric current I_{C} (Fig. 4a). The electric current I_{C} conducted via the coil COIL1 may generate the magnetic field. The mover M1 may comprise one or more permanent magnets to generate the actuator force F1 by interacting with the magnetic field of the coil COIL1. The actuator force F1 may depend on the magnitude and polarity of an electric current I_{C} conducted via the coil COIL1.

The apparatus 500 may comprise:
- a surface processing device 200 to process a surface SRF1,
- a robot ROBO1 to move the surface processing device 200 with respect to the surface SRF1,
- an electromagnetic actuator 100 to electromagnetically apply an actuator force F1 to the surface processing device 200, so as to cause the surface processing device 200 to press against the surface SRF1 with a controlled pressing force F_{SRF1},
- a force sensor FSEN1 to provide a force signal S_{F1} indicative of the pressing force F_{SRF1}, and
- a control unit CNT1 to control the pressing force F_{SRF1} by adjusting an electric current I_{C} of the electromagnetic actuator 100 based on the force signal S_{F1}.

Actuator 100 may be coupled to the surface processing device 200, so as to allow fast control of the pressing force F_{SRF1}. The mover M1 (or the stator M2) may be coupled to the surface processing device 200 so that a linear displacement (Δz_{M1}) of the mover M1 (or stator M2) in the axial direction AX1 of the mover M1 causes the same linear displacement Δz_{ZM1} of the surface processing device 200 in the same axial direction AX1. The axial direction AX1 may be parallel with the direction of movement of the mover M1, with respect to the stator M2.

The same displacement means that the length of the displacement is the same and the direction of the displacement is the same. There is no need to use e.g. toothed gears to convert electromagnetically induced rotational movements into linear movements of the processing device, as the primary movements of the mover are initially linear. The coupling between the mover and the surface processing device may be gearless and substantially frictionless. The coupling between the actuator and the surface processing device may be gearless and substantially frictionless. The gearless direct coupling of the actuator to the processing device may reduce inertial and frictional forces of moving parts.

The mover M1 may extend and/or retract with respect to the stator M2, so as to allow controlling the actuator force F1 in a situation where the distance between the stator M2 and the surface SRF1 varies. POS1 denotes a reference point of the mover M1, and POS2 denotes a reference point of the stator M2. z_{M1} denotes a distance between the points POS1 and POS2. The distance z_{M1} may have a nominal target value z_{M1,TARG}. The symbol Δz_{ZM1} may denote the difference (z_{M1}-z_{M1,TARG}) between the distance actual distance z_{M1} and the target value z_{M1,TARG}.

The electromagnetic actuator 100 may comprise a stator M2 and a mover M1, wherein at least one of the stator M2 and a mover M1 may comprise a coil COIL1 to electromagnetically generate an actuator force F1 by generating a magnetic field (FIELD2) which interacts with another magnetic field (FIELD1).

For example, the mover M1 may comprise an array ARR1 of permanent magnets (MAG1a, MAG1b) to provide a first magnetic field (FIELD1). The stator M2 may comprise a coil COIL1 to generate a second magnetic field (FIELD2) by conducting electric current (I_{C}). The magnetic field (FIELD2) of the stator M2 may interact with the magnetic field (FIELD1) of the mover M1 so as to electromagnetically generate an actuator force F1. The actuator force F1 may be a pushing force or a pulling force depending on the direction of the electric current (I_{C}). The apparatus 500 may comprise a driving unit DU1, which is arranged to provide positive electric currents (I_{C}) for causing pushing forces F1, wherein the driving unit DU1 may also be arranged to provide negative electric currents (I_{C}) for causing pulling forces F1.

In an embodiment, the mover M1 may also be implemented by using an electromagnet. The mover M1 may be implemented without permanent magnets. The mover M1 may comprise one or more second coils for generating a magnetic field (FIELD1).

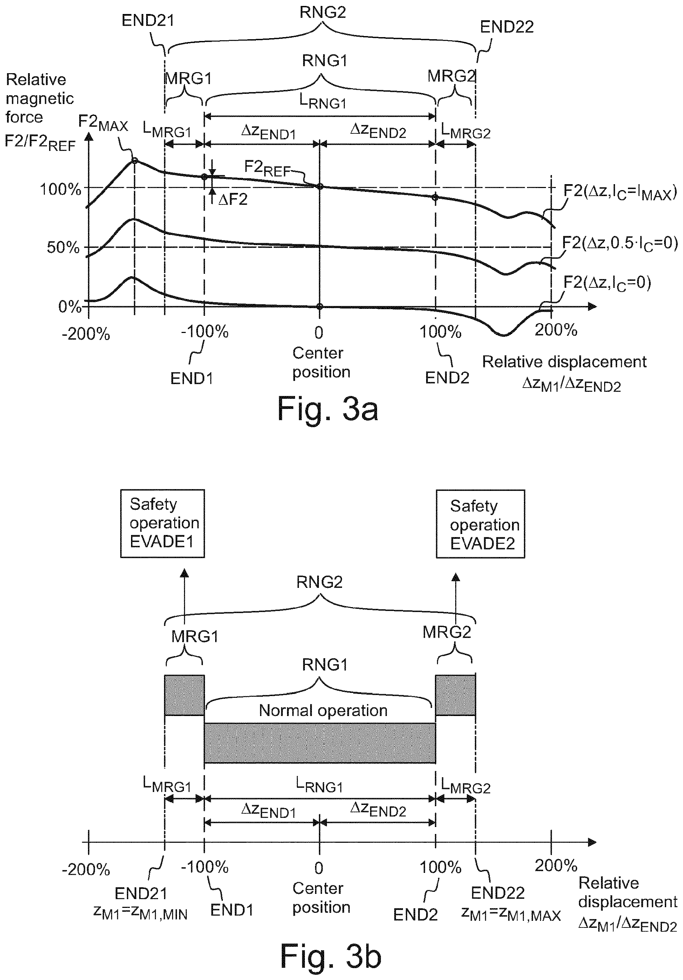

The apparatus 500 may comprise a position sensor PSEN1 to monitor the displacement Δz_{M1}. The position sensor PSEN1 may form a position signal S_{Z} indicative of the displacement Δz_{ZM1} of the mover M1 of the with respect to the stator M2. The apparatus 500 may comprise a control unit CNT1 to maintain the displacement Δz_{ZM1} within a predetermined range RNG1 by controlling movements of the robot ROBO1 based on the position signal S_{Z}. The length L_{RNG1} of the range RNG1 may be e.g. smaller than or equal to 10 mm (Fig. 3a, 3b).

The actuator 100 may be positioned between the robot ROBO1 and the device 200. The actuator 100 may be attached to the robot ROBO1 and to the device 200. The force sensor FSEN1 may be positioned between the actuator 100 and the device 200. The actuator 100 may be attached to the device 200 via the force sensor FSEN1.

The position of the surface SRF1 may be fixed with respect to a stationary reference point REF0. The reference point REF0 may be fixed with respect to the floor of a production room or hall. The robot ROBO1 may move the device 200 with respect to the stationary reference point REF0.

The abrading device 200 may be e.g. a disk sander and/or an orbital sander for grinding the surface SRF1. The object OBJ1 may be e.g. a part of an automobile, element of a building, part of a furniture, part of a marine ship, part of an airplane, or part of a wind turbine. The object may be e.g. a part of a vehicle, a part of a boat, an element of a building, or a part of an airplane. The material of the surface SRF1 may comprise e.g. wood, metal, polymer and/or ceramic material. The surface SRF1 may be processed with the apparatus 500 e.g. before or after applying a layer of paint. The surface SRF1 may be processed by using the apparatus 500 e.g. before or after applying a layer of coating material. The device 200 may e.g. polish the surface or remove rust from the surface SRF1.

The robot ROBO1 may be e.g. an industrial robot. The robot ROBO1 may be e.g. a collaborative robot.

The robot ROBO1 may comprise one or more arms ARM1, ARM2, ARM3 and one or more joints J1, J2, J3, J4 for enabling controlled movements of a tool attachment point (e.g. POS2). In particular, the robot may comprise three or more arms and three or more joints for adjusting the position and orientation of the device 200 with respect to the surface SRF1. A joint J1, J2, J3, J4 may be e.g. a pivoting joint and/or a sliding joint. The robot ROBO1 may optionally comprise a base BASE1.

DIRG denotes the direction of gravity. SX, SY and SZ denote orthogonal directions. The directions SX, SY and SZ and the reference point REF0 may define a stationary coordinate frame, which may be fixed to the object OBJ1. The direction SZ may be called e.g. as a vertical direction. The vertical direction SZ may be (anti) parallel with the direction DIRG of gravity. The directions SX and SY may be called e.g. as transverse directions. The robot ROBO1 may be arranged to move the reference point POS2 of the actuator 100 e.g. in the direction SX, in the direction SY, and/or in the direction SZ.

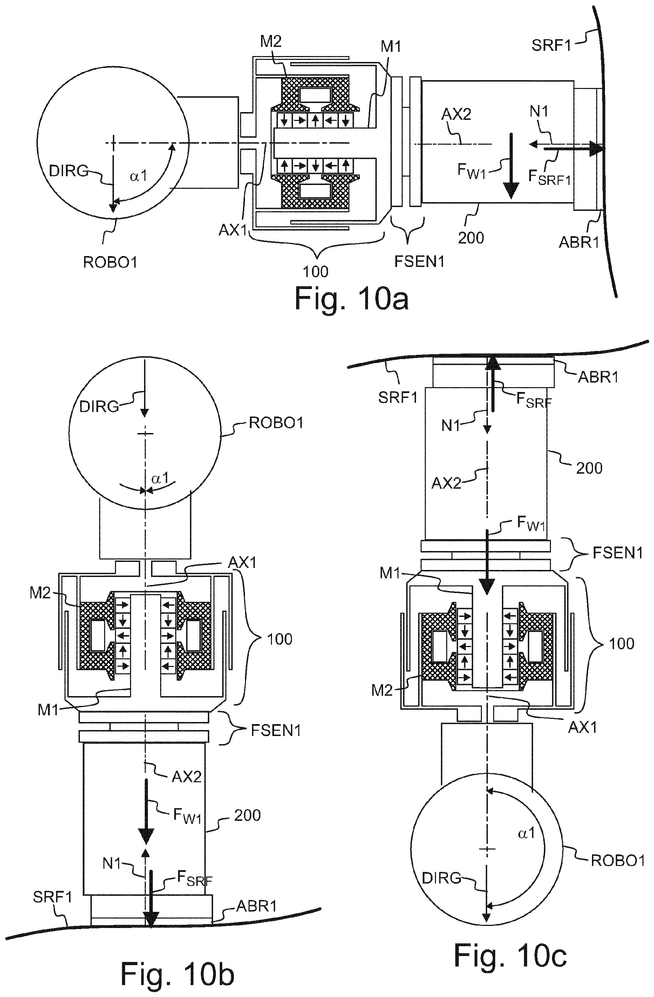

The axis AX2 of the surface processing device 200 may be parallel with the central axis AX1 of the actuator 100. The axis AX1 and/or the axis AX2 may be kept substantially parallel with the local surface normal (N1) of the surface SRF2 (see e.g. Fig. 10a). For example, the robot ROBO1 may be arranged to keep the axis AX1 of the actuator 100 substantially parallel with the direction SZ, in a situation where the surface SRF1 is locally parallel with a plane defined by the directions SX and SY at the position where the linear extension of the axis AX1 meets the surface SRF1.

The direction of the surface normal of the surface SRF2 may also be different from the vertical direction SZ. The robot ROBO1 may change the angular orientation (α1) of the axis AX1 of the actuator 100 with respect to the direction of gravity DIRG, so as to keep the axis AX1 substantially parallel with the local surface normal (N1) of the surface SRF1 at the position where the linear extension of the axis AX1 meets the surface SRF1. The axis AX1 may be kept substantially perpendicular to the surface SRF1.

In an embodiment, processing of the surface SRF1 may be started e.g. by driving the actuator 100 to a fully extended position, and subsequently bringing the processing element ABR1 in contact with the surface SRF1 while keeping the generated electromagnetic force F2 substantially equal to a predetermined initial value. Once the first contact between the processing element ABR1 and the surface SRF1 has been detected, the force control loop may keep the pressing force F_{SRF1} substantially equal to the target value F_{SRF1,TARG}. The initial value of the electromagnetic force F2, before the first contact, may be pre-selected according to the target value F_{SRF1,TARG} of the pressing force F_{SRF1} so that there is no need to adjust the electromagnetic force F2 immediately after the first contact, so as to keep the pressing force F_{SRF1} equal to the target value F_{SRF1,TARG}. In other words, the apparatus 500 may be arranged to apply a substantially constant pressing force F_{SRF1} immediately after the first contact between processing element ABR1 and the processed surface SRF1.

After the element ABR1 has been brought into the first contact with the surface SRF1, the robot ROBO1 may continue reducing the distance between the robot and the surface at least until the displacement Δz_{M1} of the actuator 100 is within the predetermined displacement range RNG1. In particular, the robot ROBO1 may change the distance between the robot and the surface until the displacement is substantially equal to zero.

The apparatus 500 may detect the first contact between the element ABR1 and the surface SRF1 e.g. by detecting a change of the signal S_{F1} of the force sensor FSEN1 and/or by detecting a change of the signal S_{Z} of the position sensor PSEN1.

In an embodiment, the processing of the surface SRF1 may be stopped e.g. simply by using the robot ROBO1 to lift or pull the surface processing device 200 away from the surface SRF1. The force control loop may keep the pressing force F_{SRF1} substantially constant until the last time of contact between the processing element ABR1 and the surface SRF1.

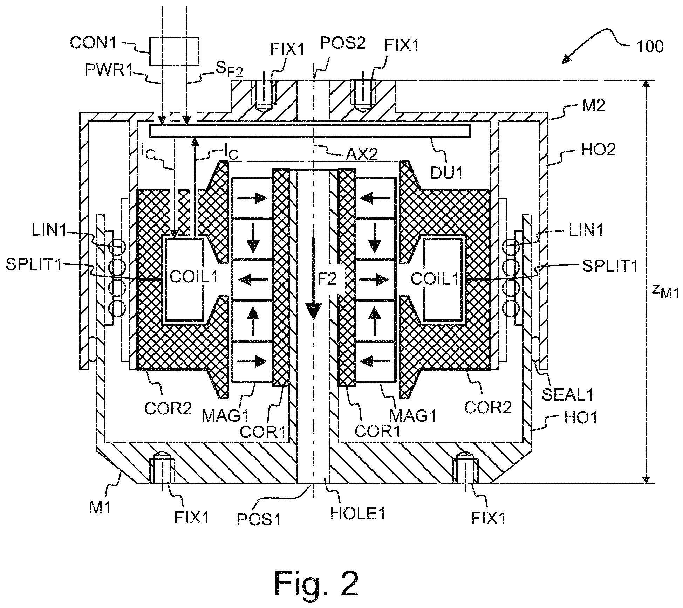

Referring to Fig. 2, the electromagnetic linear actuator 100 may comprise a mover M1 and a stator M2. The mover M1 may be arranged to move along a linear path in an axial direction AX1 with respect to the stator M2. The actuator 100 may have a central axis AX1, which passes through the center of the actuator 100, wherein said central axis AX1 is parallel with the direction of movement of the mover M1 with respect to the stator M2. The axis AX1 may also be called e.g. as the centerline of the actuator 100.

The mover M1 may have a reference point POS1, which is fixed with respect to the mover M1. The stator may have a reference point POS2, which is fixed with respect to the stator M2. z_{M1} denotes the distance between the positions POS1 and POS2. The distance z_{M1} may define the position of the point POS1 with respect to the point POS2. During operation, the distance z_{M1} may vary depending on the shape of the processed surface SRF1 and depending on the position of the arm ARM1 of the robot ROBO1. The mover M1 may be retracted or extended with respect to the stator M2 during operation.

The mover M1 may also be called e.g. as a plunger or as a piston. The mover M1 may also be called e.g. as the magnet unit of the actuator 100. The stator M2 may also be called e.g. as the coil unit of the actuator 100.

The stator M2 may comprise a coil COIL1 and a ferromagnetic core COR2 to generate a controllable magnetic field FIELD2 (Fig. 4a). The mover M1 may comprise an array of permanent magnets MAG1 to interact with the magnetic field of the stator M2 (Fig. 4b). The actuator 100 may be arranged to generate an electromagnetic force F2, which depends on the electric current I_{C} of the coil COIL1. The electromagnetic force F2 may either push or pull the magnets MAG1 of the mover M1, depending on the polarity of the current I_{C}. The magnetic field of the stator S2 may push or pull the mover M1, depending on the polarity of the current I_{C}. The magnitude of the force F2 may depend on the magnitude of the current I_{C}.

The coil COIL1 may comprise several turns of electric conductor, to conduct the coil current I_{C}. The coil COIL1 may also be called as a winding.

The mover M1 may comprise e.g. a Halbach array ARR1 of magnets MAG1, so as to provide effective interaction of the magnetic field of the stator M2 with the permanent magnets MAG1. By way of example, the magnetization direction of each magnet MAG1a, MAG1b, MAG1c, MAG1d, MAG1e is illustrated with the arrow symbols drawn on the magnets (see Fig. 4b). Each magnet (e.g. MAG1a) may be formed of multiple segments, or may be formed of a single ring magnet.

The mover M1 may optionally comprise a ferromagnetic core COR1 to increase the magnetic field of the permanent magnets and/or to shield an internal hole or cavity HOLE1 of the mover M1 from the magnetic field.

The actuator 100 may be positioned between the robot ROBO1 and the surface processing device 200. The stator M2 may be attached to the arm ARM1 of the robot ROBO1. The mover M1 may be movable with respect to the arm ARM1.

Alternatively, the mover M1 may be attached to the arm ARM1 of the robot ROBO1, and the stator M2 may be movable with respect to the arm ARM1. In other words, the roles of the mover M1 and the stator M2 may also be interchanged. The mover M1 with the permanent magnets may be stationary with respect to the arm of the robot ROBO1. The stator M2 may be attached to the surface processing device 200 directly or via the force sensor FSEN1.

The actuator 100 may be attached to the robot ROBO1 and/or to the force sensor FSEN1 and/or to the surface processing device 200 via one or more connection elements FIX1. The one or more connection elements FIX1 may operate as a mechanical interface that connects the actuator 100 to the processing device 200 to the robot ROBO1 and/or to the force sensor FSEN1 and/or to the surface processing device 200. A connection element FIX1 may comprise e.g. a thread for forming a threaded joint and/or a connection flange. For example, the mover M1 may be connected to the surface processing device 200 via the force sensor FSEN1, by using one or more connection elements FIX1. For example, the stator M2 may be attached to the arm ARM1 of the robot ROBO1, by using one or more connection elements FIX1.

The actuator 100 may optionally comprise a central duct or a central cavity HOLE1. The central duct HOLE1 may be optionally used e.g. to accommodate one or more cables and/or tubes, e.g. an electrical cable, an optical cable, and/or an air tube.

In an embodiment, the central cavity HOLE1 may at least partly accommodate the surface processing device 200. In an embodiment, the surface processing device 200 and/or the force sensor FSEN1 may be integrated in the actuator 100. The mover M1 or the stator M2 may comprise the surface processing device 200 and/or the force sensor FSEN1. Yet, the surface processing device 200 may comprise the electromagnetic actuator 100 and the force sensor FSEN1. The actuator 100 and the force sensor FSEN1 may be integrated into the device 200.

The actuator 100 may comprise one or more linear guides LIN1 to define the linear path of the mover M1 with respect to the stator M2, in the axial direction AX1. The linear guides LIN1 may comprise e.g. linear (ball) bearings and/or linear slides. The linear guides LIN1 may provide smooth, substantially frictionless linear motion and rigidity to the actuator 100. The actuator 100 may comprise e.g. three linear guides, placed at equal angular intervals (e.g. 120 degrees when viewed from the axis AX1) from each other.

In an embodiment, the core COR2 of the stator M2 may be substantially axially symmetric with respect to the central axis AX1 of the actuator 100. The magnet array ARR1 of the mover M1 may be substantially axially symmetric with respect to the axis AX1.

The current I_{C} and the magnetic field generated by the stator M2 may be arranged to vary rapidly during operation. The varying magnetic field may induce eddy currents in the ferromagnetic cores COR2, COR1. The ferromagnetic material of the core COR1 and/or the core COR2 may be selected so as to reduce losses caused by the eddy currents.

The material of the core COR1 and/or the core COR2 may be e.g. material called as the "soft magnetic composite" (SMC). The soft magnetic composite (SMC) comprises ferromagnetic particles, which are electrically insulated from each other by electrically insulating material. Each particle may be separated from adjacent particles by one or more electrically insulating layers.

The material of the core COR1 and/or the core COR2 may be e.g. amorphous ferromagnetic material. The core COR1 and/or the core COR2 may also comprise a stack of ferromagnetic layers, so as to reduce losses caused by eddy currents.

The coil COIL1 may be wound such that the semi-manufactured coil is separate from the core COR2. The coil COIL1 may be combined with the stator core COR2 after the coil has been formed. Producing the coil COIL1 separately, before the coil COIL1 is combined with the stator core COR2, may facilitate making a simpler and/or more compact coil. Producing the coil COIL1 separately, may increase fill factor of the conductor, thereby reducing electrical losses. The stator core COR2 may comprise two stator core halves. The coil COIL1 may be enclosed by the two stator core halves. The stator core COR1 mechanically support and mechanically protect the coil COIL1. The stator core COR2 may consist of two tubular stator halves. The common boundary SPLIT1 between the halves may be e.g. a planar interface (SPLIT1, see Fig. 2), which is perpendicular to the axis AX1 of the actuator 100.

The actuator 100 may have an air gap between the core COR2 and the magnets MAG1. The actuator 100 may optionally comprise a protective housing. The housing may protect the air gap and the linear guides LIN1 from dust. The mover M1 may comprise e.g. a first housing part HO1, and the stator may comprise e.g. a second housing part HO2. The moving housing part HO1 may be connected to the magnet array ARR1. The static housing part HO2 may be connected to the core COR2 of the stator. The actuator 100 may optionally comprise one or more dust seals SEAL1 to prevent dust from propagating into the interior of the actuator 100.

The electric current I_{C} conducted via the coil COIL1 may generate heat during operation. The stator core COR2 may be arranged to cool the coil COIL1 e.g. by conducting heat away from the coil COIL1 to the housing and/or to a cooling fluid. The coil COIL1 may be arranged to have a good thermal connection to the housing (HO2) via the core COR1, so as to allow cooling the coil COIL1 by conducting heat from the coil COIL1 to ambient air via the core and via the housing.

The apparatus 500 may comprise a driving unit DU1 for forming the coil current I_{C} based on the control signal S_{F2}. The actuator 100 may comprise the driving unit DU1. The driving unit DU1 may be disposed e.g. inside the housing HO2 of the actuator 100. The driving unit DU1 may be implemented e.g. as an on-board printed circuit board. The driving unit DU1 may be implemented e.g. as a semiconductor chip. The driving unit DU1 may receive operating power PWR1 via one or more connectors CON1, for forming the coil current I_{C}. The driving unit DU1 may receive the control signal S_{F2} via one or more connectors CON1. The conductors for the coil current I_{C} may be led e.g. via the common boundary SPLIT1 between the parts of the core COR1. The coil current may also be called e.g. as the driving current of the actuator 100.

Fig. 3a shows, by way of example, the generated magnetic force F2(Δz_{M1}) as the function of displacement Δz_{ZM1} for different constant current values (e.g. I_{C}=0, I_{C}=50% of I_{MAX}, I_{C}=100% of I_{MAX}). The maximum value I_{MAX} of the current I_{C} may be selected e.g. to provide a sufficient force F2, without overheating the coil COIL1.

F2_{MAX} may denote a maximum value of the generated force F2. The deviation ΔF2 of the generated force F2 from the nominal value F2_{REF} may be reduced or minimized by limiting the maximum length L_{RNG1} of the stroke of the mover M1. The surface processing apparatus 500 may be arranged to operate such that the displacement Δz_{ZM1} of the mover M1 from the nominal center position (Δz_{M1}=0) is kept within a predetermined range RNG1, which is defined by a first end position END1 and a second end position END2.

The symbol Δz_{END1} may denote the distance of the first end point END1 of the normal operating range RNG1 from the nominal center position (Δz_{M1}=0). The symbol Δz_{END2} may denote the distance of the second end point END2 of the normal operating range RNG1 from the nominal center position (Δz_{M1}=0). The nominal center position (Δz_{M1}=0) is fixed to the stator M2. The displacement Δz_{ZM1} means the position of the mover M1 with respect to the nominal center position (Δz_{M1}=0). The displacement Δz_{ZM1} indicates the relative position of the mover M1 with respect to the stator M2.

The displacement Δz_{M1} of the mover M1 from the nominal center position (Δz_{M1}=0) may be kept e.g. smaller than 5 mm. The total length L_{RNG1} of the predetermined range RNG1 may be e.g. smaller than or equal to 10 mm. The actuator 100 may be arranged to operate as a short stroke device.

The actuator 100 may be arranged to operate within the range RNG1 during normal operation, when the surface processing device 200 is used for surface processing so that the surface processing device 200 is pressed against the surface SRF1 with a controlled pressing force F_{SRF1}. The maximum length L_{RNG1} of the stroke of the mover M1 during normal operation may be e.g. smaller than or equal to 10 mm. The maximum length L_{RNG1} of the stroke of the mover M1 during normal operation may be e.g. in the range of 1 mm to 10 mm.

The maximum length L_{RNG1} is equal to the sum Δz_{END1} + Δz_{END2}. The distance Δz_{END1} may be e.g. in the range of 30% to 70% of the maximum length L_{RNG1}. The distance Δz_{END2} may be e.g. in the range of 30% to 70% of the maximum length L_{RNG1}.

The distance Δz_{END1} of the first end point END1 of the normal operating range RNG1 from the nominal center position (Δz_{M1}=0) may be e.g. in the range of 0.5 mm to 5 mm. The distance Δz_{END2} of the second end point END2 of the normal operating range RNG1 from the nominal center position (Δz_{M1}=0) may be e.g. in the range of 0.5 mm to 5 mm.

The short stroke of the mover M1 may facilitate using the actuator 100 to generate a substantially constant force F2, which may be substantially independent of the displacement Δz_{M1}. The actuator 100 may be arranged to operate as a force generator, which generates a substantially constant controllable force.

The short range RNG1 may e.g. allow minimizing the moving mass and inertia of the mover M1 of the actuator 100. The short range RNG1 may facilitate providing an electromagnetic force F2, which is substantially independent of the displacement Δz_{M1} of the mover M1. The ratio (F2/I_{C}) may be substantially independent of the displacement Δz_{ZM1} of the mover M1 within the range RNG1. The short range RNG1 may also facilitate interaction of the magnetic field with the permanent magnets, so as to provide an increased ratio (F2/I_{C}) of the generated electromagnetic force F2 to the electric current I_{C}.

By way of example, a nominal maximum value I_{MAX} of the electric current I_{C} may be e.g. in the range of 1 A to 50 A. A maximum force F2 generated by the actuator 100 may be e.g. in the range of 10 N to 1000 N, at the center position Δz_{M1}=0, at the nominal maximum current I_{C}=I_{MAX}. For example, the actuator 100 may be arranged to generate a force of 200 N at the current I_{C}=4A.

Referring to Fig. 3b, the actuator 100 may also have a mechanically defined movement range RNG2 defined by a first end point END21 and a second end point END22. It may be mechanically impossible to retract the mover M1 beyond the first end point END21. It may be mechanically impossible to extend the mover M1 beyond the second end point END22. The symbol RNG2 may mean the range from the first end position END21 to the second end position END22.

The allowed movement range RNG1 may be substantially shorter than the mechanically possible movement range RNG2. The end points END21 and END1 may define a first safety margin MRG1, which may have a length L_{MRG1}. The end points END22 and END2 may define a second safety margin MRG2, which may have a length L_{MRG2}.

The control system SYS1 of the apparatus 500 may be arranged to control movements of the robot ROBO1, so as to keep the displacement Δz_{ZM1} of the mover M1 within the allowed range RNG1. However, sometimes the control may fail such that the displacement Δz_{ZM1} is outside the allowed range RNG1.

Hitting the first mechanical end point END21 may make it impossible for the actuator 100 to regulate the pressing force F_{SRF1}. Hitting the first mechanical end point END21 may involve a risk of damaging the surface SRF1.

The allowed movement range RNG1 may be selected to provide a first safety margin MRG1 between the end points END21 and END1. The safety margin may have a length L_{MRG1}. The length L_{MRG1} may be e.g. in the range of 5% to 50% of the length (Δ_{ZEND1}+Δ_{ZEND2}) of the allowed movement range RNG1.

In an embodiment, the control system SYS1 may be arranged to start a safety procedure when the control system SYS1 detects that the displacement Δz_{ZM1} of the mover M1 is outside the allowed range RNG1. The control system SYS1 may be arranged to start a first safety procedure EVADE1 when the control system SYS1 detects that the displacement Δz_{ZM1} of the mover M1 is within the first safety margin MRG1. The safety procedure EVADE1 may comprise e.g. stopping operation of the surface processing device 200 and/or pulling the robot ROBO1 away from the surface SRF1. The safety procedure EVADE1 may comprise e.g. providing an alarm to a user of the apparatus 500.

Also hitting the second mechanical end point END22 may make it impossible for the actuator 100 to regulate the pressing force F_{SRF1}. Hitting the second mechanical end point END22 may involve a risk of lifting the surface processing device 200 away from the surface SRF1, which in turn may cause a visually detectable discontinuity on the surface SRF1. The allowed movement range RNG1 may be selected to provide a second safety margin MRG2 between the end points END2 and END22. The safety margin may have a length L_{MRG2}. The length L_{MRG2} may be e.g. in the range of 5% to 50% of the length (Δz_{END1}+Δz_{END2}) of the allowed movement range RNG1. The control system SYS1 may be arranged to start a second safety procedure EVADE2 when the control system SYS1 detects that the displacement Δz_{ZM1} of the mover M1 is within the second safety margin MRG2. The safety procedure EVADE2 may comprise e.g. slowing down the movements of the robot ROBO1. The safety procedure EVADE2 may comprise e.g. providing an alarm to a user of the apparatus 500.

Fig. 4a shows, by way of example, the stator M2 of the actuator 100. The electric current I_{C} of the coil COIL1 may generate the magnetic field FIELD2, together with the core COR2. Fig. 4b shows, by way of example, the mover M1 of the actuator 100.

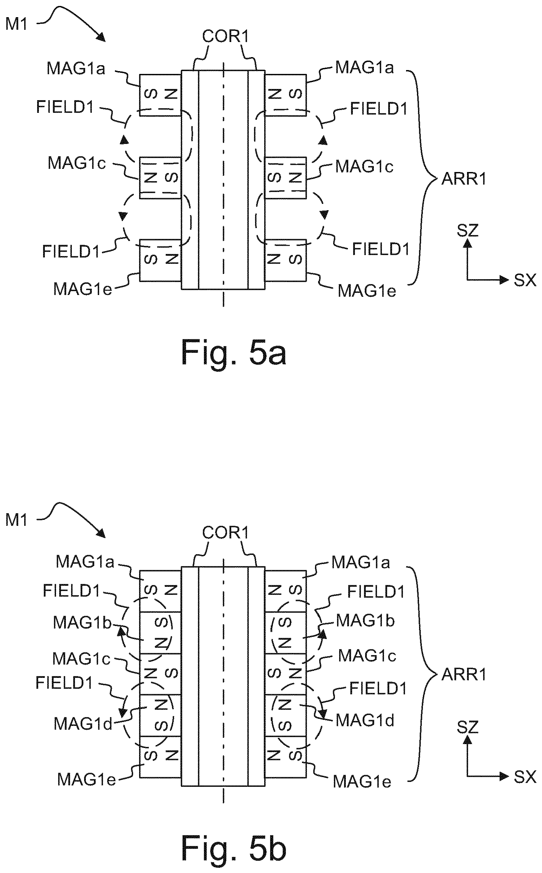

Fig. 5b shows, by way of example, an array ARR1 of magnets MAG1a, MAG1c, MAG1e of the mover M1. The magnets may form one or more magnetic fields FIELD1. The magnets may be cylindrical rings, which may surround the core COR1. Each cylindrical ring may be a single solid piece. Alternatively, each ring MAG1a, MAG1c, MAG1e may also be assembled from several magnetic blocks.

Fig. 5b shows, by way of example, orientations of magnets MAG1a, MAG1b, MAG1c, MAG1d, MAG1e of the Halbach array ARR1 of the mover M1. The magnets may be cylindrical rings, which may surround the core COR1. Each cylindrical ring may be a single solid piece. Alternatively, each ring MAG1a, MAG1b, MAG1c, MAG1d, MAG1e may also be assembled from several magnetic blocks.

The symbol N denotes the north pole of a magnet, and the symbol S denotes the south pole of the magnet. Referring to the magnets shown in the other drawings, an arrowhead may indicate the north pole **N,** and the tail of the arrow may indicate the south pole S. The orientations of the magnets may also be reversed, when compared with the orientations shown in the drawings.

The permanent magnets of the mover M1 may be e.g. neodymium magnets, samarium-cobalt magnets, or alnico magnets. Alnico means aluminum-nickel-cobalt. The permanent magnets of the mover M1 may be e.g. rare earth magnets.

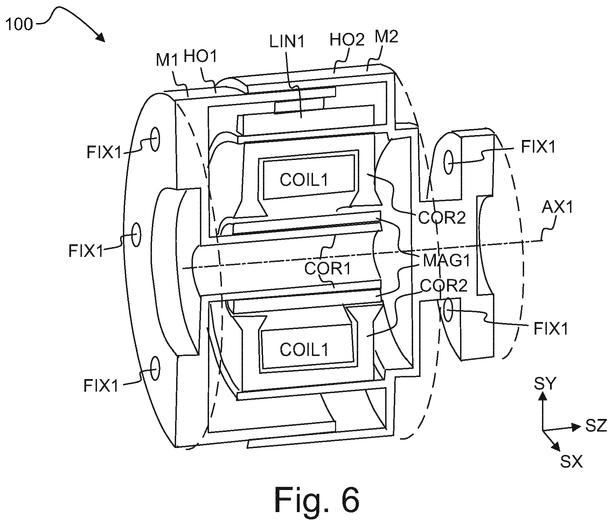

Fig. 6 shows the actuator 100 in a sectioned three-dimensional view. The cores COR1, COR2, the magnets MAG1, and the coil COIL1 may be substantially cylindrical parts, which may be axially symmetric with respect to the axis AX1.

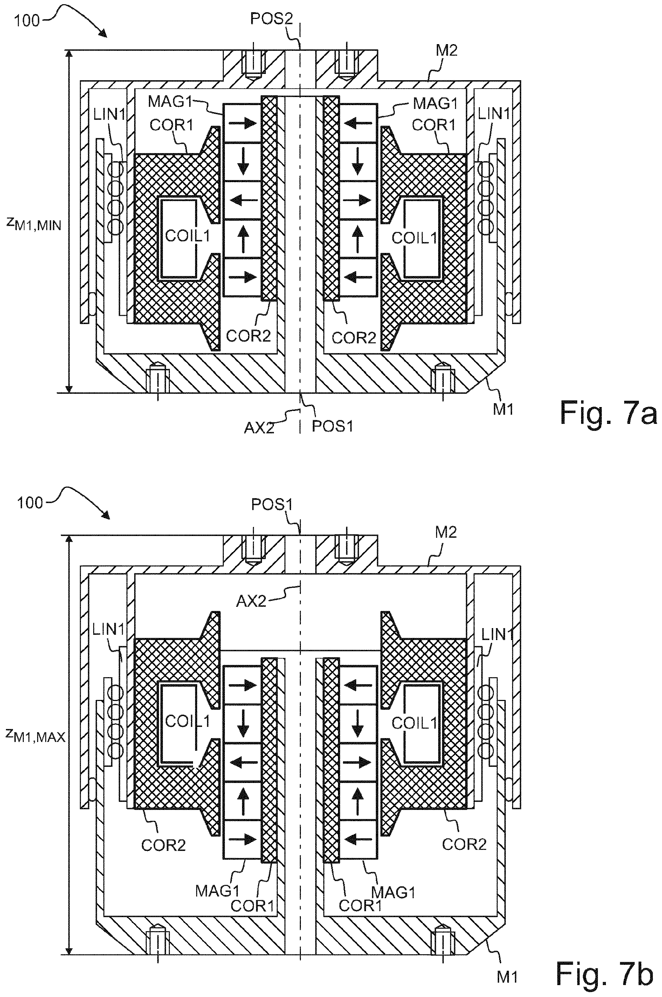

Fig. 7a shows the actuator 100 in an operating state where the mover M1 is (fully) retracted with respect to the stator M2. The distance z_{M1} between the points POS1, POS2 may be equal to a minimum value Z_{M1,MIN}. Fig. 7a may show a maximum retraction of the actuator 100.

Fig. 7b shows the actuator 100 in an operating state where the mover M1 is (fully) extended with respect to the stator M2. The distance z_{M1} between the points POS1, POS2 may be equal to a maximum value Z_{M1,MAX}. Fig. 7b may show maximum extension of the actuator 100.

The actuator 100 may optionally comprise a first mechanical stop to limit retraction of the mover M1. For example, the first mechanical stop may limit the displacement Δz_{M1} to a value, which is equal to the sum Δz_{END1}+L_{MRG1}. For example, the actuator 100 may optionally comprise a second mechanical stop to limit extension of the mover M1. For example, the second mechanical stop may mechanically limit the displacement Δz_{ZM1} to a value which equal to the sum Δz_{END2}+L_{MRG2}. During continuous processing, the apparatus 500 may be arranged to avoid limiting the movement of the mover M1 by the mechanical stop, as it may cause e.g. an abrupt change of the actuator force.

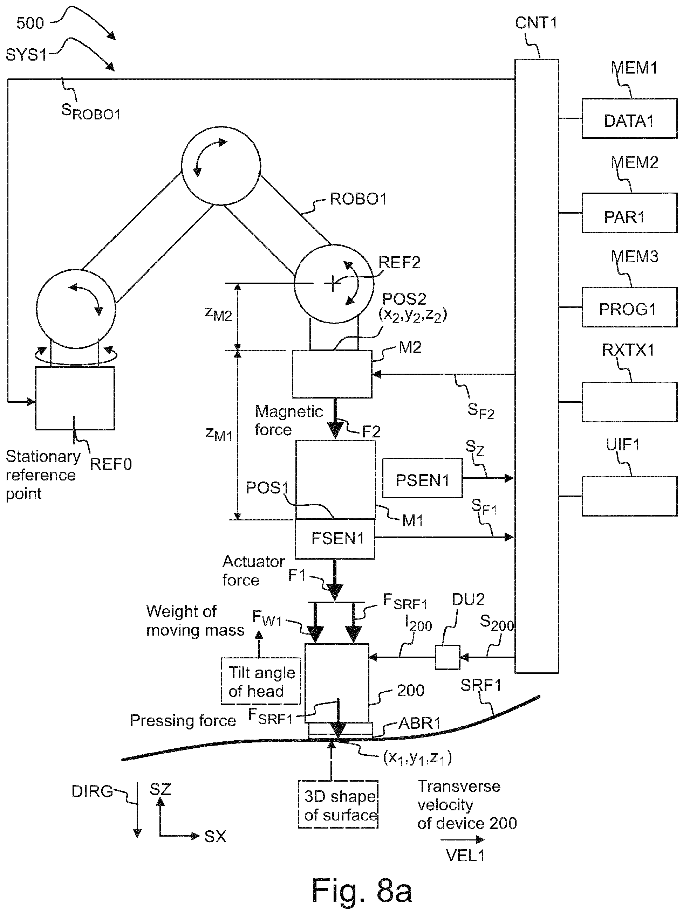

Fig. 8a shows, by way of example, a control system SYS1 of the surface processing apparatus 500. The control system SYS1 may comprise a control unit CNT1, a force sensor FSEN1, a position sensor PSEN1, the actuator 100, and the robot ROBO1.

The force sensor FSEN1 may form a force signal S_{F1} by monitoring the actuator force F1. The force signal S_{F1} may be indicative of the pressing force FSRF1.

The control unit CNT1 may be arranged to form a force control signal S_{F2} based on the measured force signal S_{F1}. The apparatus 500 may be arranged to form the coil current I_{C} according to the force signal S_{F1}, e.g. by using a driving unit DU1 (Fig. 1). The actuator 100 may generate the electromagnetic force F2 and the actuator force F1 according to the coil current I_{C}. The actuator 100 may apply the actuator force F1 to the surface processing device 200 via the force sensor FSEN1. The surface processing device 200 may press the surface SRF1 with the pressing force F_{SRF1}.

The robot ROBO1 may move the combination of the actuator 100 and the surface processing device 200 in a transverse direction, e.g. in the direction SX. The processing element ABR1 of the surface processing device 200 may meet a bump BMP1 of the processed surface SRF1. The bump BMP1 may cause sudden axial acceleration (a_{z}) of the combination of the actuator 100 and the surface processing device 200. The axial acceleration (a_{z}) may be parallel with the vertical direction SZ in a situation where the axis AX1 is parallel with the vertical direction SZ. The mover M1 may have a mass m_{M1}. The axial acceleration (a_{z}) of the mover M1 may cause an inertial force a_{z}·m_{M1}. In addition, the mass m_{M1} of the mover M1 may cause a gravity force cos(α1)·g_{z}·m_{M1}, where g_{z} denotes the gravitational acceleration (9.81m/s²). α1 denotes the tilt angle between the axis AX1 of the actuator 100 and the direction DIRG of gravity.

The surface processing device 200 may have a mass m₂₀₀. The axial acceleration (a_{z}) of the mover device 200 may cause an inertial force a_{z}·m₂₀₀ . The mass m₂₀₀ of the device 200 may cause a gravity force cos(α1)·g_{z}·m₂₀₀ (=F_{W1}).

The actuator force F1 may be equal to the sum of the magnetic force, inertial force, and gravity force of the mover M1: $F 1 = F 2 + {a}_{z} ⋅ {m}_{M 1} + cos \left(α1\right) ⋅ {g}_{Z} ⋅ {m}_{M 1}$

The pressing force F_{SRF1} may be equal to the sum of the actuator force, inertial force, and gravity force of the device 200: ${F}_{SRF 1} = F 1 + {a}_{z} ⋅ {m}_{200} + cos \left(α1\right) ⋅ {g}_{Z} ⋅ {m}_{200}$

Equation (2) may be re-arranged as follows: $F 1 = {F}_{SRF 1} - {a}_{z} ⋅ {m}_{200} - cos \left(α1\right) ⋅ {g}_{Z} ⋅ {m}_{200}$

Equation (3) illustrates how the actuator force F1 may depend on the pressing force F_{SRF1} exerted on the surface SRF1. The sensor force F1 is equal to the actuator force F1. The actuator force F1 may be indicative of the pressing force FSRF1.

Equations (1) and (2) may be combined e.g. as follows: ${F}_{SRF 1} = F 2 + {a}_{z} ⋅ \left({m}_{M 1}+{m}_{200}\right) + cos \left(α1\right) ⋅ {g}_{Z} ⋅ \left({m}_{M 1}+{m}_{200}\right)$

Equation (4) illustrates how the pressing force F_{SRF1} may depend on the magnetic force F2 generated by the coil COIL1.

The apparatus 500 may comprise a force sensor FSEN1 for monitoring the actuator force F1. The actuator force F1 may also be called as a sensor force. The force sensor FSEN1 may form a force signal S_{F1} indicative of the force F1. The actuator force F1 may be measured with the force sensor FSEN1. The magnetic force F2 may be determined based on the coil current I_{C}. When the actuator force F1 and the magnetic force F2 are known, the axial acceleration may be determined from the difference (F1-F2) of the forces F1, F2 e.g. by using the following equation (which may be derived e.g. from equation (1)): ${a}_{z} \left(t\right) = \left(F1\left(t\right)-F2\left(t\right)-cos\left(α1\right)⋅{g}_{Z}⋅{m}_{M 1}\right) / {m}_{M 1}$

Thus, the acceleration az may be determined from the signal of the force sensor FSEN1. However, it is not necessary to determine the acceleration from the signal of the force sensor FSEN1. For example, the apparatus 500 may comprise an acceleration sensor ASEN1 for measuring axial acceleration a_{Z}. Yet, the acceleration may be determined from the signal of the position sensor PSEN1, as the second derivative of the displacement Δz_{ZM1} of the mover M1.

The control unit CNT1 may be arranged to adjust the electromagnetic force F2(t) based on the axial acceleration (a_{z}(t)) so as to keep the pressing force F_{SRF1}(t) substantially equal to the target value F_{SRF1,TARG}. The control unit CNT1 may be arranged to adjust the electromagnetic force F2(t) e.g. according to the following equation (which may be derived based on equation (4)): $F 2 \left(t\right) = {F}_{SRF 1 , TARG} - \left({a}_{z}\left(t\right)⋅\left({m}_{M 1}+{m}_{200}\right)+cos\left(α1\right)⋅{g}_{Z}⋅\left({m}_{M 1}+{m}_{200}\right)\right)$

In other words, the control unit CNT1 may be arranged to keep the sum of the electromagnetic force F2, the inertial force a_{z}·(m_{M1}+m₂₀₀), and the gravity force cos(α1)·g_{z}·(m_{M1}+m₂₀₀) substantially equal to the target value F_{SRF1,TARG} by adjusting the electric current (I_{C}) based on the axial acceleration (a_{z}).

The control unit CNT1 may be configured to control the pressing force F_{SRF1} by controlling the coil current I_{C} based on the force signal S_{F1}. The control unit CNT1 may control the coil current I_{C} by providing a force control signal S_{F2}. The force control signal S_{F2} may be sent to a driving unit DU1, which may form the coil current I_{C} according to the force control signal S_{F2}.

The control unit CNT1 may be configured to maintain the pressing force F_{SRF1} substantially equal to a predetermined target value F_{SRF1,TARG}, by controlling the coil current I_{C} based on the force signal S_{F1}.

The actuator 100 may sometimes operate momentarily as an electric generator, which converts the mechanical movement of the mover M1 into electrical energy. The driving unit DU1 may be arranged to absorb and/or store the electrical energy generated by the actuator 100. The driving unit DU1 may absorb and/or store the electrical energy e.g. in order to damp un-wanted axial oscillations of the surface processing device 200. The driving unit DU1 may e.g. dissipate the electrical energy as heat and/or may store the electrical energy in a capacitor. The driving unit DU1 may comprise e.g. one or more resistors for dissipating electrical energy as heat.

The weight (F_{W1}) of the surface processing device 200 and the weight of the mover M1 may be specified e.g. by the operating parameter data PAR1. In an embodiment, the weight (F_{W1}) of the surface processing device 200 may be measured by using the force sensor FSEN1 before processing of the surface SRF1, before the surface processing device 200 is brought into contact with the surface SRF1. For example, the apparatus may measure a first weight value by using the force sensor FSEN1 when the axis AX1 has vertical orientation (or a first orientation), the apparatus may measure a second weight value by using the force sensor FSEN1 when the axis AX1 has horizontal orientation (or a second different orientation), and the apparatus may determine the weight of the surface processing device 200 from the difference of said weight values.

The control system SYS1 may comprise a position sensor PSEN1 to monitor the displacement Δz_{ZM1} of the mover M1. The position sensor PSEN1 may be e.g. a linear encoder for measuring the position of the mover M1 with respect to the stator M2. The position sensor PSEN1 may also be e.g. a proximity sensor for monitoring the displacement Δz_{M1}. The position sensor PSEN1 may be e.g. a capacitive, inductive, or optical proximity sensor. The position sensor PSEN1 may form a position signal S_{Z} indicative of the displacement Δz_{ZM1} of the mover M1.

The control unit CNT1 may be arranged to control movements of the robot ROBO1 based on the position signal S_{Z}. The control unit CNT1 may be arranged to control movements of the robot ROBO1 so as to keep the displacement Δz_{ZM1} within the predetermined range RNG1. The control unit CNT1 may form a robot control signal S_{ROBO1} for controlling the movements of the robot ROBO1. The signal S_{ROBO1} may be communicated to the robot ROBO1.

The actual three-dimensional shape of the surface SRF1 may be specified e.g. by a group of surface points. The position of each surface point may be specified by coordinates (x,y,z). For example, the surface SRF1 may comprise a surface point (x₁, y₁, z₁). The control system SYS1 may comprise a model of the surface SRF1. The model may be specified e.g. by surface shape data DATA1. The control system SYS1 may comprise a memory MEM1 for storing the surface shape data DATA1. The actual three-dimensional shape of the surface SRF1 may approximately correspond to the shape data DATA1. However, the actual three-dimensional shape of the surface SRF1 does not exactly correspond to the shape data DATA1. In other words, there may be a mismatch between the actual shape of the surface SRF1 and the shape data DATA1. For example, the actual surface SRF1 may comprise an unexpected bump (or a depression) BMP1, which is not specified by the shape data DATA1. The control system SYS1 and the robot ROBO1 cannot fully anticipate the bump BMP1. The surface processing device 200 may experience the bump BMP1 as an unexpected geometric feature. The robot ROBO1 may move the surface processing device 200 in a transverse direction (SX). The surface processing device 200 moving in the transverse direction may hit the bump BMP1 so that the pressing force F_{SRF1} is momentarily increased (or decreased) due to the axial acceleration (a_{z}). The sudden change of the pressing force F_{SRF1} may be detected by analyzing the force signal S_{F1}. The control unit CNT1 may rapidly decrease (or increase,) the magnetic force F2 based on the force signal S_{F1}, so as to keep the pressing force F_{SRF1} approximately equal to the target value F_{SRF1}, _{TARG}.

The surface SRF1 may be a horizontal surface, or the orientation of the surface may deviate from the horizontal. The surface processing device 200 may be above the surface SRF1 (Fig. 10b) or below the surface SRF1 (Fig. 10c), with respect to the direction DIRG of gravity. The control system SYS1 may control movements of the robot ROBO1 so that the axis AX1 of the actuator 100 may be substantially parallel with the local surface normal of the surface SRF1. The orientation of the axis AX1 may be specified by the tilt angle α1, with respect to the direction DIRG of gravity. The control system SYS1 may determine the tilt angle α1 based on the surface shape data DATA1.

The target value F_{SRF1}, _{TARG} of the pressing force F_{SRF1} and the range RNG1 may be specified by operating parameter data PAR1. The control system SYS1 may comprise a memory MEM2 for storing the operating parameter data PAR1.

In an embodiment, the apparatus 500 may measure the actual three-dimensional shape of the surface SRF1, by using information about the trajectory of the robot ROBO1 and by using information about the displacement Δz_{ZM1} at several different positions (x₂,y₂,z₂) in the trajectory (PATH2) of the robot ROBO1. The apparatus 500 may store the measured actual shape of the surface SRF1 in a memory. The apparatus 500 may determine a difference between the measured actual shape of the surface SRF1 and a nominal shape of the surface SRF1. The apparatus 500 may store the difference in a memory. The measured shape of the surface SRF1 and/or the difference may be used e.g. for quality control purposes. In particular, information about unexpected protrusions and/or dents may be stored for quality control purposes. The apparatus 500 may provide an indication to a user and/or to a control system of a production line when an unexpected protrusion or a dent is detected.

In an embodiment, the apparatus 500 may also have an operating mode where the surface processing device 200 is automatically moved along the surface SRF1 in order to gather geometric data for determining surface shape data DATA1. The apparatus 500 may be arranged to operate as measuring instrument for measuring the shape of a surface SRF1. The processing element ABR1 may be optionally and temporarily replaced with a sensing element, which does is used only for detecting the shape of the surface SRF1. The sensing element may have a smooth surface, which does not damage or alter the surface SRF1 when bought into contact with the surface SRF1. The sensing element may be subsequently replaced with an abrasive element ABR1, after the shape of the (first) surface has been measured. The actual processing of the (first) surface, or the actual processing of a second similar surface may be performed after the surface shape data DATA1 of the first surface has been measured.

The control system SYS1 may comprise a user interface UIF1 for receiving user input from a (human) user and/or for providing information to the (human) user. The user interface UIF1 may comprise e.g. a display, a touch screen, a mouse, and/or a keyboard. In an embodiment, the user interface UIF1 may also comprise the robot ROBO1. For example, a user may manually move the robot ROBO1 in order to teach desired movements to the apparatus 500. For example, a user may manually move the device 200 along a surface SRF1 in order to gather geometric data for determining surface shape data DATA1.

The control system SYS1 may comprise a communication unit RXTX1 for receiving and/or transmitting data. For example, the control system SYS1 may receive surface shape data DATA1 and/or operating parameters via the communication unit RXTX1. The communication unit RXTX1 may communicate e.g. with an Internet server and/or with another device. The communication unit RXTX1 may communicate e.g. via electrical wire, optical cable and/or radio signal. The communication unit RXTX1 may communicate e.g. via a wireless network.

The control system SYS1 may be configured to provide modified surface shape data DATA1 based on the geometric deviations BMP1 detected during the processing.

The robot ROBO1 and the processing device 200 may be controlled by the control unit CNT1, according to the instructions specified by control signals S_{ROBO1}, S₂₀₀. The control unit CNT1 may be configured to perform processing operations by executing program code PROG1. The apparatus 500 may comprise a memory MEM1 for storing surface shape data DATA1, a memory MEM2 for storing operating parameter data PAR1, and a memory MEM3 for storing program code PROG1. The control unit CNT1 may be configured to operate the robot ROBO1, the actuator 100, and the device 200 according to operating parameters specified in parameter data PAR1. The parameter data PAR1 may also define e.g. rotation speed values for driving a motor of the device 200.

The control unit CNT1 may be arranged to control operation of the surface processing device 200 during the processing. The control unit CNT1 may form a control signal S₂₀₀ for controlling operation of the surface processing device 200. The control signal S₂₀₀ may be communicated to the device 200 or to a driving unit of the device 200, for controlling operation of the device 200. For example, the control unit CNT1 may start and/or stop operation of the surface processing device 200. For example, the control unit CNT1 may change the rotation speed of a motor of the surface processing device 200.

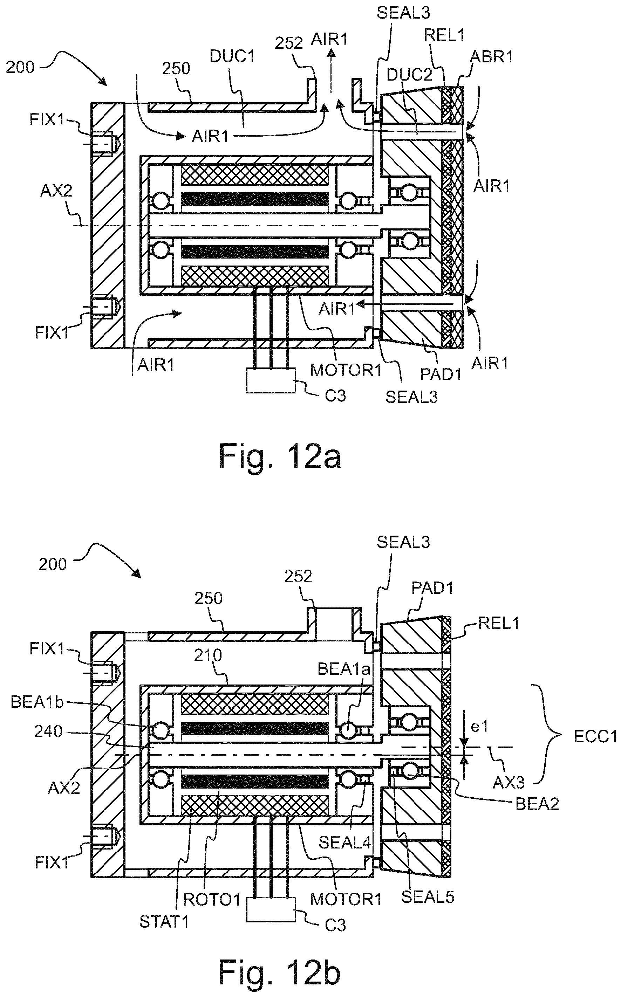

The abrading device 200 may comprise e.g. an electric motor MOTOR1, which may be driven by one or more electric currents I₂₀₀. (Fig. 12a). A driving unit DU2 may form the one or more electric currents I₂₀₀ for driving the electric motor MOTOR1 at a selected speed of rotation. The driving unit DU2 may form the one or more electric currents I₂₀₀ based on a control signal S₂₀₀.

z_{M1} may denote the distance between the positions POS1, POS2. z_{M2} may denote a distance between the reference position POS2 of the actuator 100 and a reference position REF2 fixed to the arm ARM1 of the robot ROBO1. The reference position POS2 may be specified e.g. by coordinates (x₂,y₂,z₂).

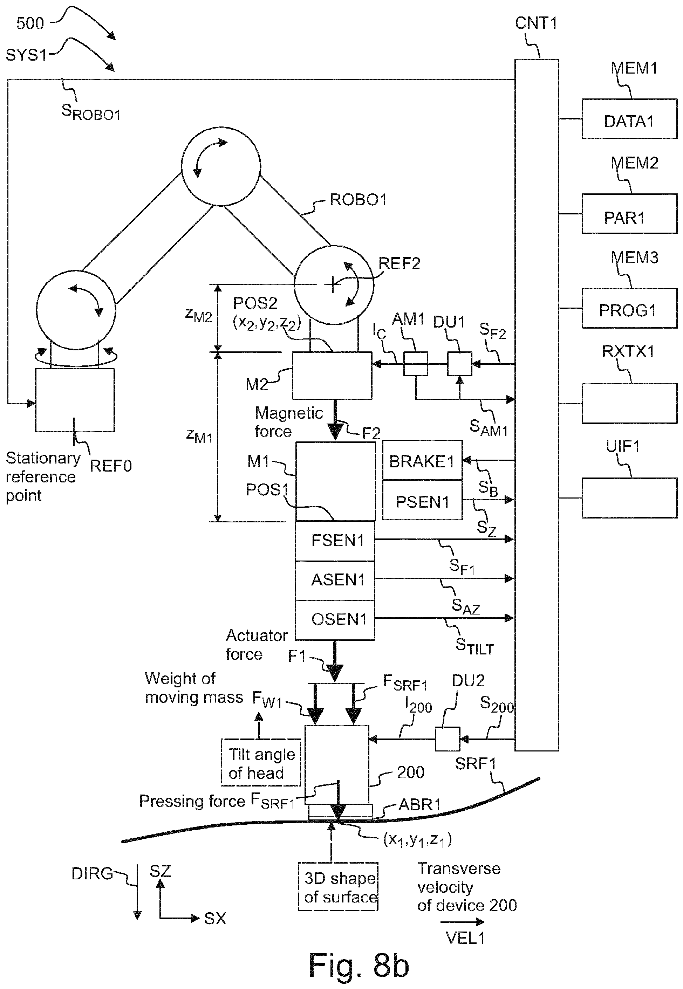

Referring to Fig. 8b, the control system SYS1 may comprise a current metering unit AM1 to provide a signal S_{AM1} indicative of the magnitude of the coil current I_{C}. The signal S_{AM1} may be communicated e.g. to the control unit CNT1 and/or to the driving unit DU1. The optional current metering unit AM1 may be omitted e.g. in a situation where the coil current I_{C} provided by the driving unit DU1 may be determined based on the control signal S_{F2}.

In an embodiment, the magnetic force F2 generated by the actuator 100 may be determined from the magnitude of the coil current I_{C}. In an embodiment, the pressing force may be determined as a combination of the magnetic force F2, the gravitational component caused by the moving parts (M1, 200), and the inertial forces caused by acceleration of the moving parts (M1, 200).

The control system SYS1 may comprise an acceleration sensor ASEN1 to provide a signal S_{AZ} indicative of the axial acceleration a_{Z} of the mover M1, in the direction of the axis AX1. The control system SYS1 may determine an inertial component of the pressing force based on the axial acceleration a_{Z}. The optional acceleration sensor ASEN1 may be omitted e.g. in a situation where the axial acceleration a_{Z} may be determined from the signal S_{Z} of the displacement sensor PSEN1. The axial acceleration a_{Z} may be determined as the second derivative of the axial displacement Δz_{M1}.

The control system SYS1 may comprise an orientation sensor OSEN1 to provide a signal S_{TILT} indicative of the orientation α1 of the axis AX1 of the actuator 100 with respect to the direction DIRG of gravity. The control system SYS1 may determine a gravitational component of the pressing force based on the orientation α1. The control system SYS1 may determine a gravitational component of the pressing force based on the orientation α1 and based on the weight of the moving parts (i.e. the weight of the mover M1, the weight of the surface processing device 200). The optional orientation sensor OSEN1 may be omitted e.g. in a situation where the orientation α1 may be determined from one or more control signals S_{ROBO1} of the robot ROBO1. The optional orientation sensor OSEN1 may be omitted e.g. in a situation where the orientation α1 may be determined from the signal of the acceleration sensor ASEN1.

Rapid acceleration of the surface processing device 200 may also cause unwanted movements of the mover M1 with respect to the stator M2. The combination of the driving unit DU1 and the electromagnetic actuator 100 may be arranged to operate as an electromagnetic brake, so as to dampen or prevent unwanted movements. The control unit CNT1 may control the coil current so as to dampen or prevent the unwanted movements. Preventing the unwanted movements may e.g. allow increasing the speed of the movements of the robot ROBO1 during a transitional time period where the surface processing device 200 is not in contact with a surface SRF1.

The robot ROBO1 may also perform auxiliary movements e.g. when the apparatus 500 has stopped processing a first object OBJ1, and moves the device 200 to a starting position for processing a second object. The robot ROBO1 may perform a transitional movement to move the surface processing device 200 from a first position (e.g. x₁₆) to a second position (e.g. x₀) such that the surface processing device 200 is not in contact with the surface SRF1. The control system SYS1 of the apparatus 500 may be arranged to control the electric current (I_{C}) such that the electromagnetic actuator 100 prevents and/or dampens movements of the mover M1 of the electromagnetic actuator 100 with respect to the stator M2 of the electromagnetic actuator 100 during the transitional movement.

In an embodiment, the mover M1 may be temporarily driven to an end position END21 or END22, and the mover may be subsequently kept at the end position END21 or END22 with a sufficient magnetic force F2 during a transitional movement. In other words, the mover M1 may be temporarily parked at an end position END21 or END22 for performing a transitional movement.

The apparatus 500 may optionally comprise an additional brake BRAKE1 to prevent unwanted movements of the mover M1 with respect to the stator M2. The brake BRAKE1 may comprise e.g. an additional actuator which is arranged to press a first friction element (e.g. a braking shoe) against a second friction element according to a brake control signal S_{B}. The brake BRAKE1 may allow or prevent movements of the mover M1 according to the brake control signal S_{B}. The brake BRAKE1 may also be arranged to damp movements of the mover M1 by absorbing energy from the mover M1. Yet, the brake BRAKE1 may comprise e.g. a locking element (e.g. locking pin or a clamp) to allow or prevent movements of the mover M1, according to the brake control signal S_{B}.

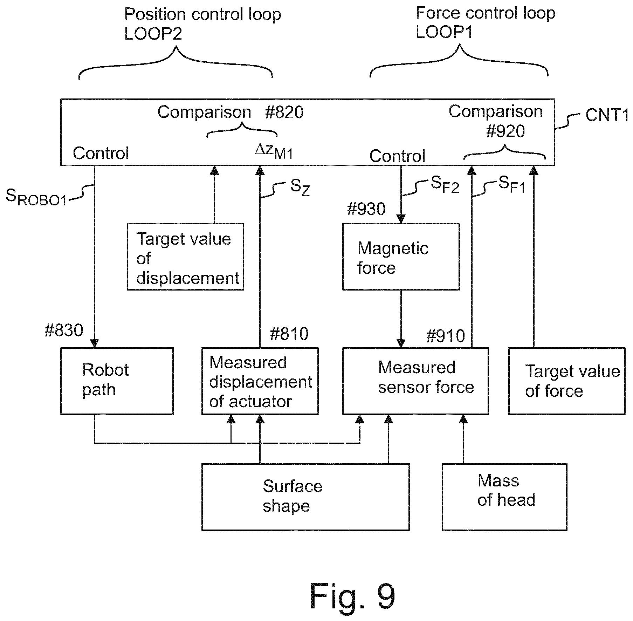

Referring to Fig. 9, the control unit CNT1 may be configured to control the magnetic force F2 by using a first control loop LOOP1. The control unit CNT1 may be configured to control the displacement Δz_{M1} by using a second control loop LOOP2.

The first control loop LOOP1 may comprise the force sensor FSEN1, the control unit CNT1, and the actuator 100. The tilt angle α1 of the actuator 100 and the geometric shape of the processed surface SRF1 may have an effect on the pressing force F_{SRF1}. The force sensor may provide a force signal S_{F1} indicative of the pressing force F_{SRF1} (step #910). A sudden change of the pressing force F_{SRF1} may be detected by comparing the force signal S_{F1} with a target value (step #920). The control unit CNT1 may adjust the coil current I_{C} based on the force signal S_{F1} (step #930).

The second control loop LOOP2 may comprise the position sensor SPOS1, the control unit CNT1, and the robot ROBO1. The geometric shape of the processed surface SRF1 may have an effect on the displacement Δz_{M1}. The position sensor SPOS1 may form a signal S_{Z} indicative of the displacement Δz_{M1} (step #810). The control unit CNT1 may be configured to compare the measured displacement Δz_{ZM1} with the predetermined allowed range RNG1 (step #820). The control unit CNT1 may be configured to control movements of the robot ROBO1 based on the comparison, so as to keep the displacement Δz_{ZM1} within the range RNG1 (step #830).

Figs. 10a, 10b, 10c show how the gravitational component (F_{w1}=cos(α1)·g_{z}·m₂₀₀) caused by the mass of the surface processing device 200 may depend on the tilt angle α1. The tilt angle α1 may specify the orientation of the axis AX1 of the actuator 100 with respect to the direction DIRG of gravity.

Fig. 10a shows a situation where the axis AX1 is horizontal, and the tilt angle α1 = 90°. The gravitational component F_{W1} may be zero. In this case, the gravitational component F_{W1} does not have an effect on the pressing force FSRF1.

N1 denotes the surface normal of the surface SRF1, at the position where the linear extension of the axis AX1 (and the axis AX2) meets the surface SRF1.

Fig. 10b shows a situation where the axis AX1 is parallel with the direction DIRG of gravity, and the surface processing device 200 is above the surface SRF1. The gravitational component F_{W1} may be equal to g_{z}·m₂₀₀. In this case, the gravitational component F_{W1} increases the pressing force F_{SRF1}.

Fig. 10c shows a situation where the axis AX1 is parallel with the direction DIRG of gravity, and the surface processing device 200 is below the surface SRF1. The gravitational component F_{W1} may be equal to -1·g_{z}·m₂₀₀. In this case, the gravitational component F_{W1} reduces the pressing force F_{SRF1}.

The actuator 100 may be arranged to generate a pulling actuator force F1 in a situation where the target value F_{SRF1,TARG} of the pressing force F_{SRF1} is smaller than the weight of the surface processing device 200. The actuator 100 may be arranged to generate a pushing actuator force F1 in a situation where the target value F_{SRF1,TARG} of the pressing force F_{SRF1} is greater than the weight of the surface processing device 200.

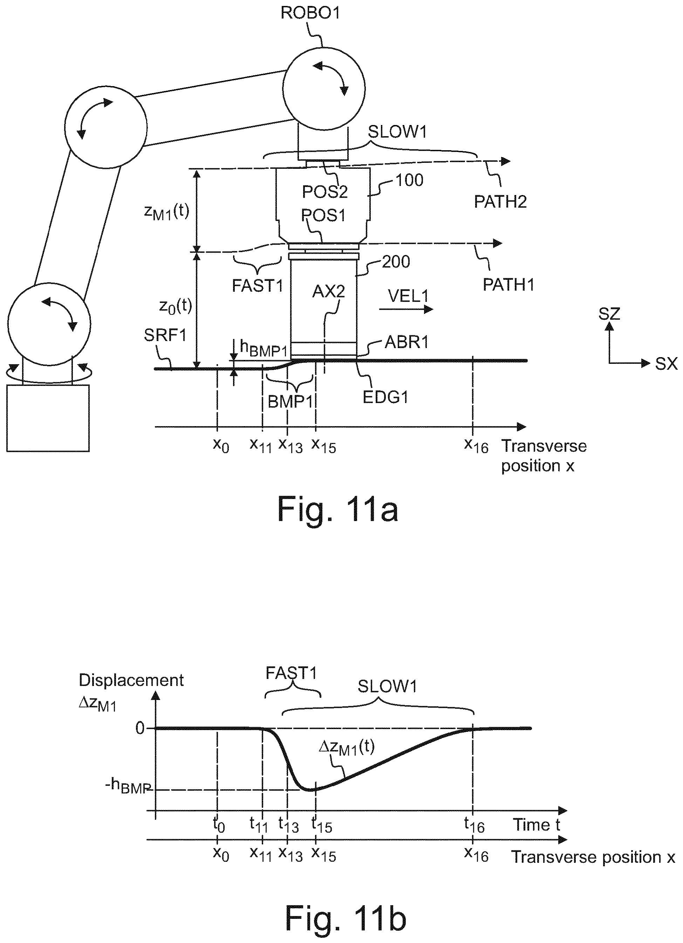

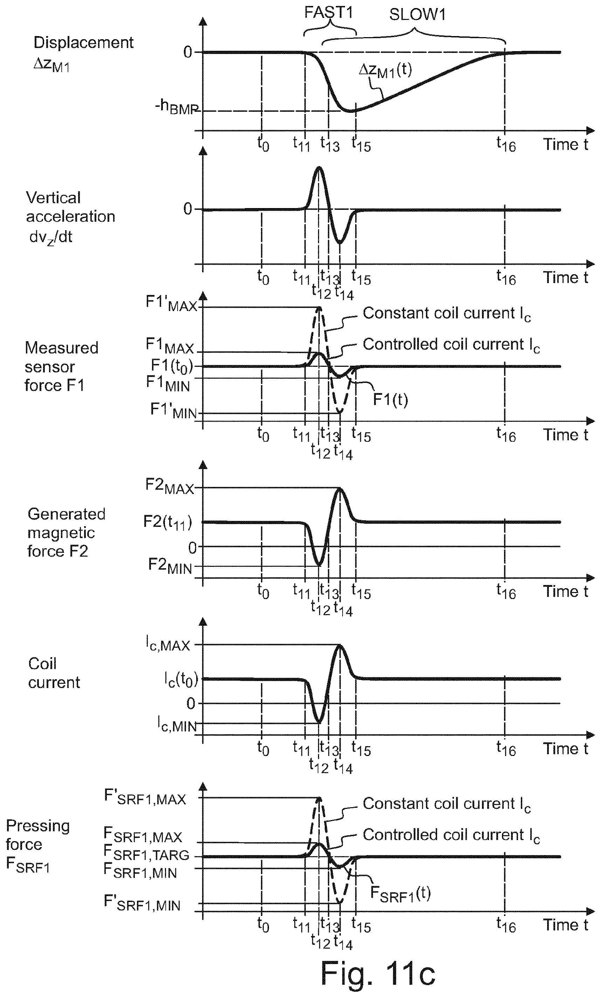

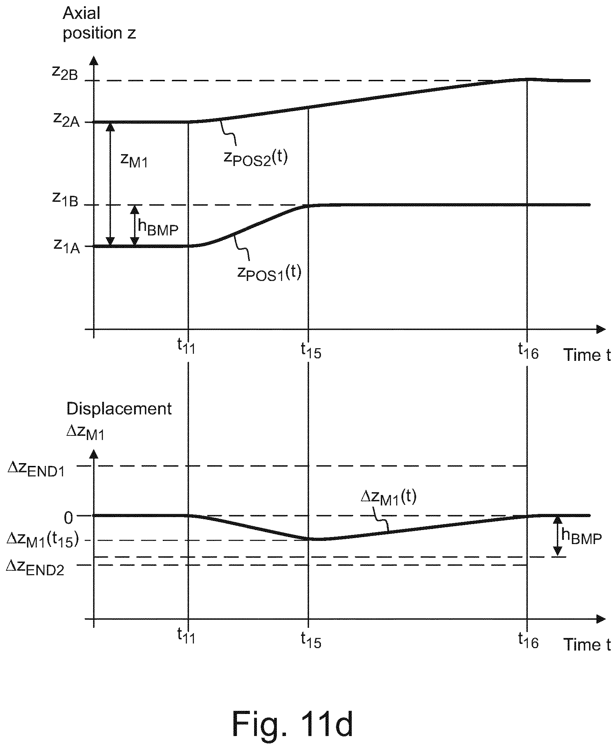

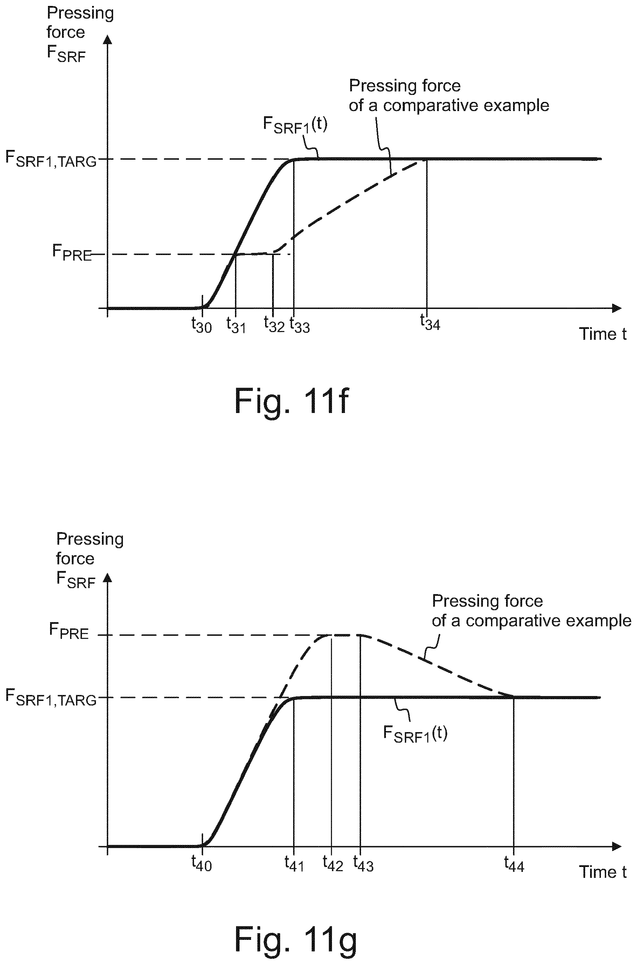

Fig. 11a, 11b, 11c, 11d show a situation where the surface processing device 200 hits an unexpected bump BMP1 of the surface SRF1. The robot ROBO1 may move the device 200 in the transverse direction SX at a transverse velocity VEL1.

The symbol h_{BMP1} denotes the height of the bump BMP1. PATH1 denotes the path of the point POS1 of the mover M1. PATH2 denotes the path of the point POS2 of the stator M2. z_{M1}(t) denotes the distance between the points POS1, POS2, as a function of time t. z₀(t) denotes the distance between the point POS1 and the surface SRF1. The distance z₀(t) may be defined by the axial dimension of the surface processing device 200 and the axial dimension of the force sensor FSEN1. The distance z₀(t) may remain constant or substantially constant during operation.

x₀ denotes a transverse position where the processing element ABR1 of the surface processing device 200 propagates along a flat portion of the surface SRF1, at a time t₀, before hitting the bump BMP1. The processing element ABR1 may be e.g. an abrasive disk.

x₁₁ denotes a transverse position where the leading edge EDG1 of the processing element ABR1 of the surface processing device 200 first time hits the bump BMP1.

The collision of the surface processing device 200 with the bump BMP1 may suddenly push the surface processing device 200 upwards. The collision may accelerate the surface processing device 200 in the axial direction AX1.

The control unit CNT1 may adjust the magnetic force F2 based on the force signal S_{F1}. The control unit CNT1 may have a fast (faster) response to the detected change of the pressing force F_{SRF1}, e.g. within a spatial region indicated by the symbol FAST1. The control unit CNT1 may have a slow (slower) response to the detected change of displacement Δz_{ZM1} e.g. within a spatial region indicated by the symbol SLOW1, respectively.

x₁₃ denotes a transverse position (of the leading edge EDG1) where the surface processing device 200 has maximum axial velocity component dv_{z}/dt. The collision with the unexpected bump BMP1 causes a displacement Δz_{ZM1} of the actuator 100.

x₁₅ denotes a transverse position where the leading edge EDG1 reaches a flat portion of the surface SRF1 again, after passing the bump BMP1.

The control unit CNT1 may control the movements of the robot ROBO1, so as to compensate the detected displacement Δz_{M1}. In particular, the control unit CNT1 may modify the path PATH2 of the point POS2 of the stator M2. The control unit CNT1 may modify the path PATH2 e.g. within a spatial region indicated by the symbol SLOW2.

The control unit CNT1 may have a slow (slower) response for modifying the path PATH2, when compared with the fast (faster) response for adjusting the magnetic force F2.

x₁₆ denotes a transverse position where the a change of displacement Δz_{ZM1} of the actuator 100 has been fully compensated, as a time t₁₆.

Fig. 11b shows temporal evolution Δz_{M1}(t) of the displacement Δz_{ZM1} during the time period where the surface processing device 200 propagates over the bump BMP1, as shown in Fig. 11a. The leading edge EDG1 of the element ABR1 may coincide with the transverse positions x₀, x₁₁, x₁₃, x₁₅, x₁₆ at times t₀, t₁₁, t₁₃, t₁₅, t₁₆, respectively. The displacement Δz_{ZM1} may reach an extreme value (-h_{BMP1} or +h_{BMP1}) at a time t₁₅.

Fig. 11c shows evolution of several parameters during the time period where the surface processing device 200 propagates over the bump BMP1, as shown in Fig. 11a.

The uppermost graph of Fig. 11c shows the displacement Δz_{M1}(t) as the function of time t.

The second graph from the top of Fig. 11c shows temporal evolution of the axial acceleration dv_{z}/dt of the surface processing device 200. The device 200 may experience maximum axial acceleration at a time t₁₂. The time t₁₂ may be between the times t₁₁ and t₁₃. The device 200 may experience maximum axial deceleration (i.e. negative acceleration) at a time t₁₄. The time t₁₄ may be between the times t₁₃ and t₁₅.

The third graph from the top of Fig. 11c show temporal evolution F1(t) of the actuator force F1. The solid curve F1(t) shows temporal evolution of the actuator force F1 in a situation where the coil current I_{C} is adjusted based on the measured actuator force F1. The dashed curve shows temporal evolution F1(t) of the actuator force F1 in a comparative situation where the coil current I_{C} is kept constant.

The fourth graph from the top of Fig. 11c shows temporal evolution F2(t) of the magnetic force F2 generated by the actuator 100. In an embodiment, the direction of the magnetic force F2 may be reversed, so as to compensate a sudden change of the pressing force F_{SRF1}. The actuator may during a short time period even pull the mover M1 upwards (e.g. at the time t₁₂), instead of pushing the device 200 against the surface SRF2.

The fifth graph from the top of Fig. 11c shows temporal evolution I_{C}(t) of the coil current I_{C}, so as to generate the magnetic force F2. In an embodiment, the polarity of the coil current I_{C} may be temporarily reversed, so as to compensate a sudden change of the pressing force F_{SRF1}.

The lowermost graph of Fig. 11c show temporal evolution F_{SRF1}(t) of the pressing force F_{SRF1}. The temporal evolution F_{SRF1}(t) of the pressing force F_{SRF1} may correspond to the temporal evolution F1(t) of the actuator force F1. The pressing force F_{SRF1}(t) may be determined from the actuator force F1(t) by adding the gravitational and inertial components caused by the surface processing device 200. The solid curve F_{SRF1}(t) shows temporal evolution of the pressing force F_{SRF1} in the situation where the coil current I_{C} is adjusted based on the measured actuator force F1. F_{SRF1,MIN} and F_{SRF1,MAX} may denote the minimum and the maximum value of the pressing force F_{SRF1} in the situation where the coil current I_{C} is adjusted based on the measured actuator force F1. F_{SRF1,TARG} may denote the target value of the pressing force F_{SRF1}.

The dashed curve shows the temporal evolution F_{SRF1}(t) of the pressing force F_{SRF1} in the comparative situation where the coil current I_{C} is kept constant. F'_{SRF1,MIN} and F'_{SRF1,MAX} may denote the minimum and the maximum value of the pressing force F_{SRF1} in the comparative situation.

Fig. 11d shows temporal evolution of the axial position z_{POS1}(t) of the mover M1, temporal evolution of the axial position z_{POS2}(t) of the stator M2, and temporal evolution of the displacement Δz of the mover M1 with respect to the stator M2, in a situation where the surface processing device 200 is moved along the surface SRF1 over the bump BMP1. The surface SRF1 may comprise a sloped portion BMP1 between a first flat portion and a second flat portion of the surface SRF1. The first flat portion may have an elevation z_{1A}. The second flat portion may have an elevation z_{1B}. The difference z_{1B} - z_{1A} may be equal to the height h_{BMP1} of the sloped portion BMP1.

The stator M2 may have a vertical position z_{2A} before the surface processing device 200 meets the bump BMP1. The control system SYS1 may control the vertical position of the stator M2, by controlling the position of the robot ROBO1, such that the displacement Δz_{ZM1} of the mover M1 may be substantially equal to zero before the surface processing device 200 meets the bump BMP1. When the surface processing device 200 meets the bump BMP1, the control system SYS1 may detect a change of the displacement Δz_{ZM1} based on the signal S_{Z} of the displacement sensor PSEN1. The control system SYS1 may gradually compensate the change of the displacement Δz_{ZM1} by moving the robot ROBO1 and the stator M2 such that the displacement Δz_{ZM1} of the mover M1 may be substantially equal to zero after passing over the bump BMP1. The maximum absolute value of the displacement Δz_{M1}(t₁₅) at the time t₁₅ may also be smaller than the maximum absolute value of the allowed displacement Δz_{END2} of the movement range RNG1. The stator M2 may have a vertical position z_{2B} after the change of the displacement Δz_{ZM1} has been compensated at the time t₁₆.

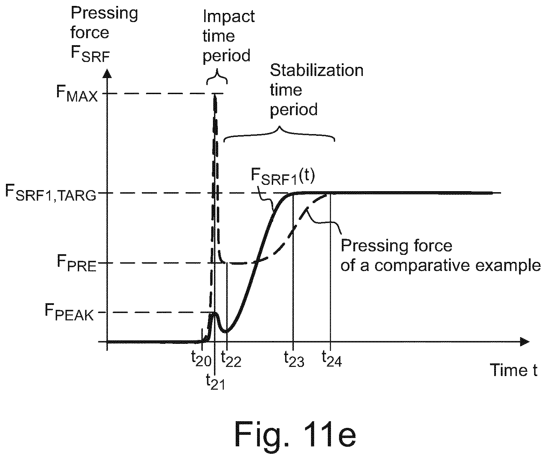

Fig. 11e shows the temporal evolution of the pressing force in two situations where the surface processing device 200 collides with the surface SRF1 with a high velocity.

The solid curve shows the temporal evolution of the pressing force in a situation where inertial forces caused by the impact are at least partly compensated by the electromagnetic actuator 100. The control system SYS1 may detect the impact e.g. based on the force signal S_{F1} and/or based on acceleration a_{z} of the mover M1. The control system SYS1 may adjust the coil current I_{C} based on the force signal S_{F1} and/or based on an acceleration signal such that the inertial forces caused by the impact are at least partly compensated by the electromagnetic actuator 100. The surface processing device 200 may first contact the surface SRF1 at the time t₂₀. The pressing force F_{SRF1} may reach a local maximum F_{PEAK} at time t₂₁. Compensation of the impact forces may reduce risk of damaging the surface SRF1. After the impact, the control system SYS1 may rapidly adjust the coil current I_{C} based on the force signal S_{F1} such that the pressing force FSRF1 becomes equal to the target value F_{SRF1}, _{TARG} at a time t₂₃.

The dashed curve shows the temporal evolution of the pressing force in a comparative situation where the surface processing device 200 is supported by a pneumatic spring without using the electromagnetic actuator 100. In the comparative example, the pressing force FSRF1 may temporarily reach a high maximum value F_{MAX} at a time t₂₁ due to the inertial forces caused by the impact. The high force may involve a risk of damaging the surface SRF1. The pneumatic spring may have been initially filled with pressurized air so as to provide an initial force F_{PRE} after the impact at a time t₂₂. The target value of the pressing force may be F_{SRF1}, _{TARG}. Pressurized air may be gradually added to the pneumatic spring via a valve so as to increase the force generated by the pneumatic spring. The force generated by the pneumatic spring may be gradually increased until the pressing force reaches the target value F_{SRF1}, _{TARG} at a time t₂₄.

Fig. 11f shows the temporal evolution of the pressing force in two situations where the surface processing device 200 is slowly brought into contact with the surface SRF1.

The solid curve shows the temporal evolution of the pressing force in a situation where the pressing force FSRF1 is controlled by using the electromagnetic actuator 100. The surface processing device 200 may first contact the surface SRF1 at the time t₃₀. The control system SYS1 may rapidly adjust the coil current I_{C} based on the force signal S_{F1} such that the pressing force F_{SRF1} becomes equal to the target value F_{SRF1}, _{TARG} at a time t₃₃. The electromagnetic actuator 100 may control the pressing force F_{SRF1} faster and/or more accurately than a pneumatic spring.

The dashed curve shows the temporal evolution of the pressing force in a comparative situation where the surface processing device 200 is supported by a pneumatic spring without using the electromagnetic actuator 100. The pneumatic spring may have been initially filled with pressurized air so as to provide an initial force F_{PRE} after the first contact at a time t₃₁. The target value of the pressing force may be F_{SRF1}, _{TARG}. The control system may detect after the time t₃₁ that actual pressing force is smaller than the target value F_{SRF1}, _{TARG}. Starting from a time t₃₂, pressurized air may be gradually added to the pneumatic spring via a valve so as to increase the force generated by the pneumatic spring. The force generated by the pneumatic spring may be gradually increased until the pressing force reaches the target value F_{SRF1}, _{TARG} at a time t₃₄.

Fig. 11f shows the temporal evolution of the pressing force in two situations where the surface processing device 200 is slowly brought into contact with the surface SRF1.

The solid curve shows the temporal evolution of the pressing force in a situation where the pressing force FSRF1 is controlled by using the electromagnetic actuator 100. The surface processing device 200 may first contact the surface SRF1 at the time t₄₀. The control system SYS1 may rapidly adjust the coil current I_{C} based on the force signal S_{F1} such that the pressing force F_{SRF1} becomes equal to the target value F_{SRF1}, _{TARG} at a time t₄₁. The electromagnetic actuator 100 may control the pressing force F_{SRF1} faster and/or more accurately than a pneumatic spring.

The dashed curve shows the temporal evolution of the pressing force in a comparative situation where the surface processing device 200 is supported by a pneumatic spring without using the electromagnetic actuator 100. The pneumatic spring may have been initially filled with pressurized air so as to provide an initial force F_{PRE} at a time t₄₂. The target value of the pressing force may be F_{SRF1}, _{TARG}. The control system may detect after the time t₄₂ that actual pressing force is greater than the target value F_{SRF1}, _{TARG}.

Pressurized air may be gradually removed from the pneumatic spring via a valve so as to decrease the force generated by the pneumatic spring. Pressurized air may be gradually removed from the pneumatic spring after the time t₄₃. The force generated by the pneumatic spring may be gradually decreased until the pressing force reaches the target value F_{SRF1}, _{TARG} at a time t44.

Referring back to Fig. 1, the surface processing device 200 may be e.g. a rotary sanding machine or an orbital sanding machine. The sanding machine may also be called as an abrading device. The surface processing device 200 may comprise processing element ABR1 for processing the surface SRF1. The surface SRF1 may be processed with the element ABR1 by causing oscillatory and/or rotary motion of the element ABR1 when the element is in contact with the surface SRF1. The element ABR1 may be e.g. an abrading element. The element ABR1 may also be e.g. a soft element, which is arranged to apply e.g. a wax coating to the surface SRF1

The apparatus 500 may be arranged to process a surface SRF1 of the object by abrading. The surface processing device 200 may be an abrading device.

The term abrading may include e.g. grinding, sanding, polishing and/or honing.

The abrading device 200 may be e.g. a random orbital sander device.

Referring to Figs. 12a and 12b, the surface processing device 200 may be e.g. an orbital sander device 200. The processing element ABR1 may be e.g. an abrasive article.

The device 200 may comprise means REL1 for holding the processing element ABR1. The device 200 may comprise a rotating and/or oscillating support element PAD1 to hold the element ABR1. The element ABR1 may be releasably attached the support element PAD1. The element ABR1 may be attached the support element PAD1 e.g. by hook and loop fasteners (REL1). The element ABR1 may also be attached the support element PAD1 e.g. by pressure sensitive adhesive.

The device 200 may be an orbital sander, which may be arranged to cause orbital oscillation of the element ABR1. The device 200 may comprise e.g. an electric motor or a pneumatic motor MOTOR1 to cause oscillation and/or rotation of the processing element ABR1. The device 200 may comprise an eccentric pivot mechanism ECC1 to convert a rotary motion of the motor MOTOR1 into an oscillatory motion of the element ABR1. The device 200 may comprise a rotating and/or oscillating support element PAD1 to hold the element ABR1. The pivot mechanism ECC1 may cause oscillation of the support element PAD1. The motor MOTOR1 may drive the pivot mechanism ECC1 e.g. via a shaft 240. The motor MOTOR1 may have a first axis AX2 of rotation. The support element PAD1 may be eccentrically pivoted to the shaft of the motor MOTOR1 by one or more bearings BEA2. The pivot point may have a pivot axis AX3. The displacement e1 between the axis AX2 and the pivot axis AX3 may be e.g. in the range of 0.5 mm to 20 mm, typically in the range of 1.25 to 6 mm. Each abrasive grain of the abrasive element ABR1 may move along a substantially circular orbit, which has a diameter of two times the displacement value e1.

In an embodiment, the rotation of the support element PAD1 of the orbital sanding device may be substantially prevented during eccentric oscillation of the support element PAD1. The device 200 may comprise e.g. a braking seal SEAL3 to allow oscillation of the support element PAD1 while preventing free rotation of the support element PAD1. The device 200 may comprise e.g. a resilient belt to allow oscillation of the support element PAD1 while preventing free rotation of the support element PAD1.

In an embodiment, the orbital sanding device may comprise a gearbox to cause controlled rotation of the oscillating support element PAD1. In an embodiment, the support element PAD1 of the orbital sanding device 200 may be arranged to rotate freely during eccentric oscillation of the support element PAD1.

The device 200 may comprise one or more attachment elements FIX1, for connecting the device 200 to the actuator 100 or to the force sensor FSEN1. An attachment element FIX1 may comprise e.g. connection flange and/or a thread for forming a threaded joint.

Processing the surface SRF1 with the abrasive element ABR1 forms released particles. The abrasive grains of the abrasive element ABR1 separate small particles from the surface by grinding. The released particles may comprise e.g. particles formed from the material of the surface SRF1 and/or abrasive grains detached from the abrasive element ABR1. The element ABR1 and the support element PAD1 may comprise one or more openings for removing the released particles together with an air flow AIR1. The element ABR1 and the support element PAD1 may define one or more ducts DUC2 for removing the released particles together with an air flow AIR1. The device 200 may comprise a suction port 252, which is connectable to suction system, so as to suck air and released particles from the abrading device 200. The suction system may cause a partial vacuum, which may draw air and released particles from the device 200. The suction port 252 may be in fluid connection with the particle-removing ducts DUC2 and/or with the cooling ducts DUC1. The suction port 252 may be connected e.g. to a dust suction device e.g. via a flexible hose.

The electric motor MOTOR1 may comprise a rotating rotor ROTO1, a nonrotating stator STAT1, and one or more bearings BEA1a, BEA1b. The electric motor MOTOR1 may receive one or more driving currents via a connector C3.

The abrading device 200 may comprise one or more ducts DUC1 for an air flow AIR1, so as to cool the motor MOTOR1. The device 200 may comprise one or more flow guiding elements 250 to guide an air flow AIR1 near the casing 210 of the motor MOTOR1, so as to cool the motor MOTOR1. The device 200 may comprise one or more seals SEAL4, SEAL5 to protect critical parts of the device 200 from released particles.

The abrasive element ABR1 may be e.g. a coated abrasive article, which comprises abrasive grains attached to a carrier layer. The element ABR1 may be e.g. a coated abrasive article, which comprises abrasive grains attached to a carrier mesh layer. The element ABR1 may be e.g. a bonded abrasive article, which comprises abrasive grains carried in a matrix.

In an embodiment, the surface processing device 200 may also be arranged e.g. to polish a wax layer applied on the processed surface SRF1. The wax layer may be applied e.g. on a painted surface of an automobile or on the hull of a boat. The processing element ABR1 may comprise a soft material layer for polishing the surface without causing abrasion.

In an embodiment, it is not necessary to supply pressurized air to the electromagnetic actuator 100. The electromagnetic actuator 100 does not require a pneumatic connection, can thus be used at a processing site SITE1 which does not have a pneumatic infrastructure

The figures are schematic. The particular embodiments described above with reference to the accompanying drawings are illustrative only and not meant to limit the scope of the invention, which is defined by the appended claims.

## Claims

1. A surface processing apparatus (500), comprising:
- a surface processing device (200) arranged to process a surface (SRF1),
- a robot (ROBO1) arranged to move the surface processing device (200) with respect to the surface (SRF1), and
- an electromagnetic actuator (100) arranged to electromagnetically apply an actuator force (F1) to the surface processing device (200), so as to cause the surface processing device (200) to press against the surface (SRF1) with a controlled pressing force (F_{SRF1}),
**characterised in that** the electromagnetic actuator (100) comprises one or more linear guides (LIN1) arranged to define a linear path of a mover (M1) of the actuator (100) with respect to a stator (M2) of the actuator (100),
wherein the apparatus (500) further comprises:
- a control unit (CNT1) configured to control the pressing force (F_{SRF1}) by adjusting an electric current (I_{C}) of the electromagnetic actuator (100), and
- a position sensor (PSEN1) arranged to form a position signal (S_{Z}) indicative of a displacement (Δz_{M1}) of the mover (M1) of the electromagnetic actuator (100) with respect to the stator (M2) of the electromagnetic actuator (100),
wherein the control unit (CNT1) is configured to maintain the displacement (Δz_{M1}) of the electromagnetic actuator (100) within a predetermined range (RNG1) by controlling movements of the robot (ROBO1) based on the position signal (S_{Z}).

2. The apparatus (500) of claim 1, wherein the electromagnetic actuator (100) comprises permanent magnets, which are arranged according to the Halbach array configuration.

3. The apparatus (500) of claim 1 or 2, wherein the control unit (CNT1) is configured to maintain the displacement (Δz_{M1}) of the mover M1 from a nominal center position (Δz_{M1}=0) smaller than 5 mm.

4. The apparatus (500) according to any of claims 1 to 3, wherein the control unit (CNT1) is configured to adjust the electric current (I_{C}) of the electromagnetic actuator (100) based on a tilt angle (α1) of the surface processing device (200), so as to maintain the pressing force (F_{SRF1}) substantially independent of the tilt angle (α1), wherein the tilt angle (α1) specifies the orientation (AX2) of the surface processing device (200) with respect to the direction (DIRG) of gravity.

5. The apparatus (500) according to any of claims 1 to 4, wherein the electromagnetic actuator (100) is arranged to provide also a pulling actuator force (F1) so as to pull the surface processing device (200) towards the robot (ROBO1).

6. The apparatus (500) according to any of claims 1 to 5, wherein the apparatus (500) is arranged to reverse the direction of the actuator force (F1) by reversing the polarity of the electric current (I_{C}) of the actuator (100), wherein the apparatus (500) comprises a driving unit (DU1), which is arranged to provide a positive electric current (I_{C}) for causing a pushing force (F1), and wherein the driving unit (DU1) is arranged to provide a negative electric current (I_{C}) for causing a pulling force (F1).

7. The apparatus (500) according to any of claims 1 to 6, comprising a force sensor (FSEN1) to provide a force signal (S_{F1}) indicative of the pressing force (F_{SRF1}), wherein the control unit (CNT1) is arranged to control the pressing force (F_{SRF1}) by adjusting the electric current (I_{C}) based on the force signal (SF1).

8. The apparatus (500) according to any of claims 1 to 7, comprising at least one sensor (FSEN1,ASEN1,PSEN1) to measure acceleration (a_{z}) of the surface processing device (200) in the axial direction (AX1) of the electromagnetic actuator (100), wherein the control unit (CNT1) is arranged to control the pressing force (F_{SRF1}) by adjusting the electric current (I_{C}) based on the measured acceleration (a_{z}).

9. The apparatus (500) according to any of claims 1 to 8, comprising at least one sensor (FSEN1, ASEN1,PSEN1) to measure acceleration (a_{z}) of the surface processing device (200) in the axial direction (AX1) of the electromagnetic actuator (100), wherein the control unit (CNT1) is arranged to compensate an effect of the axial acceleration (a_{z}) on the pressing force (F_{SRF1}) by adjusting the electric current (I_{C}) of the electromagnetic actuator (100) based on the measured axial acceleration (a_{Z}).

10. The apparatus (500) according to any of claims 1 to 9, wherein the apparatus (500) is arranged to perform a protective operation (EVADE1) when the displacement (Δz_{M1}) of the electromagnetic actuator (100) is detected to be within a predetermined region (MRG1), which is outside the allowed movement range (RNG1), the protective operation (EVADE1) comprising stopping a movement of the robot (ROBO1) and/or moving the robot (ROBO1) away from the processed surface (SRF1).

11. The apparatus (500) according to any of claims 1 to 10, wherein the robot (ROBO1) is arranged to perform a transitional movement to move the surface processing device (200) from a first position (x₁₆) to a second position (x₀) such that the surface processing device (200) is not in contact with the surface (SRF1), wherein the control system (SYS1) of the apparatus (500) is arranged to control the electric current (I_{C}) such that the electromagnetic actuator (100) prevents and/or dampens movements of the mover (M1) of the electromagnetic actuator (100) with respect to the stator (M2) of the electromagnetic actuator (100) during the transitional movement.

12. The apparatus (500) according to any of claims 1 to 11, wherein the apparatus (500) is arranged to measure the weight (F_{W1}) of the surface processing device (200) by using a force sensor (FSEN1).

13. The apparatus (500) according to any of claims 1 to 12, wherein the surface processing device (200) is an abrading device.

14. The apparatus (500) according to any of claims 1 to 13, wherein the surface processing device (200) is arranged to cause rotary and/or oscillatory motion of an abrasive article (ABR1) with respect to the surface (SRF1).

15. A method for processing a surface (SRF1) by using an apparatus (500), the apparatus (500) comprising:
- a surface processing device (200) to process the surface (SRF1),
- a robot (ROBO1) to move the surface processing device (200) with respect to the surface (SRF1), and
- an electromagnetic actuator (100),
wherein the electromagnetic actuator (100) comprises one or more linear guides (LIN1) to define a linear path of a mover (M1) of the actuator (100) with respect to a stator (M2) of the actuator (100),
the method comprising:
- using the electromagnetic actuator (100) to electromagnetically apply an actuator force (F1) to the surface processing device (200), so as to cause the surface processing device (200) to press against the surface (SRF1) with a controlled pressing force (F_{SRF1}),
wherein the apparatus (500) further comprises a position sensor (PSEN1) to form a position signal (S_{Z}) indicative of a displacement (Δz_{M1}) of the mover (M1) of the electromagnetic actuator (100) with respect to the stator (M2) of the electromagnetic actuator (100),
wherein the method further comprises:
- controlling the pressing force (F_{SRF1}) by adjusting an electric current (I_{C}) of the electromagnetic actuator (100), and
- maintaining the displacement (Δz_{M1}) of the electromagnetic actuator (100) within a predetermined range (RNG1) by controlling movements of the robot (ROBO1) based on the position signal (S_{Z}).

## Patentansprüche

1. Oberflächenverarbeitungsgerät (500), umfassend:
- eine Verarbeitungsvorrichtung (200), die zur Verarbeitung einer Oberfläche (SRF1) angeordnet ist,
- einen Roboter (ROBO1), der angeordnet ist, um die Oberflächenverarbeitungsvorrichtung (200) relativ zur Oberfläche (SRF1) zu bewegen, und
- einen elektromagnetischen Aktuator (100), der angeordnet ist, um elektromagnetisch eine Aktuatorkraft (F1) auf die Oberflächenverarbeitungsvorrichtung (200) auszuüben, um zu bewirken, dass die Oberflächenverarbeitungsvorrichtung (200) mit einer geregelten Anpresskraft (F_{SRF1}) gegen die Oberfläche (SRF1) drückt, **dadurch gekennzeichnet, dass**
der elektromagnetische Aktuator (100) eine oder mehrere Linearführungen (LIN1) umfasst, die angeordnet sind, um einen linearen Pfad eines Bewegers (M1) des Aktuators (100) relativ zu einem Stator (M2) des Aktuators (100) zu definieren, wobei das Gerät (500) ferner Folgendes umfasst:
- eine Steuereinheit (CNT1), die konfiguriert ist, die Druckkraft (F_{SRF1}) durch Einstellen eines elektrischen Stroms (I_{C}) des elektromagnetischen Aktuators (100) zu steuern, und
- einen Positionssensor (PSEN1), der angeordnet ist, um ein Positionssignal (S_{Z}) zu erzeugen, das eine Verschiebung (Δz_{M1}) des Bewegers (M1) des elektromagnetischen Aktuators (100) relativ zum Stator (M2) des elektromagnetischen Aktuators (100) angibt, wobei die Steuereinheit (CNT1) konfiguriert ist, um die Verschiebung (Δz_{M1}) des elektromagnetischen Aktuators (100) innerhalb eines vorgegebenen Bereichs (RNG1) zu halten, indem sie die Bewegungen des Roboters (ROBO1) auf der Basis des Positionssignals (S_{Z}) steuert.

2. Gerät (500) nach Anspruch 1, wobei der elektromagnetische Aktuator (100) Permanentmagnete umfasst, die nach der Halbach-Arraykonfiguration angeordnet sind.

3. Gerät (500) nach Anspruch 1 oder 2, wobei die Steuereinheit (CNT1) konfiguriert ist, um die Verschiebung (Δz_{M1}) des Bewegers M1 gegenüber einer Nennmittelposition (Δz_{M1}=0) auf einem Wert von weniger als 5 mm zu halten.

4. Gerät (500) nach einem der Ansprüche 1 bis 3, wobei die Steuereinheit (CNT1) konfiguriert ist, um den elektrischen Strom (I_{C}) des elektromagnetischen Aktuators (100) basierend auf einem Neigungswinkel (α1) der Verarbeitungsvorrichtung (200) anzupassen, um die Druckkraft (F_{SRF1}) im Wesentlichen unabhängig vom Neigungswinkel (α1) aufrechtzuerhalten, wobei der Neigungswinkel (α1) die Ausrichtung (AX2) der Oberflächenverarbeitungsvorrichtung (200) in Bezug auf die Richtung (DIRG) der Schwerkraft angibt.

5. Gerät (500) nach einem der Ansprüche 1 bis 4, wobei der elektromagnetische Aktuator (100) angeordnet ist, um zudem eine Zugaktuatorkraft (F1) bereitzustellen, um die Oberflächenverarbeitungsvorrichtung (200) in Richtung des Roboters (ROBO1) zu ziehen.

6. Gerät (500) nach einem der Ansprüche 1 bis 5, wobei das Gerät (500) angeordnet ist, um die Richtung der Aktuatorkraft (F1) durch Umkehrung der Polarität des elektrischen Stroms (I_{C}) des Aktuators (100) umzukehren, wobei das Gerät (500) eine Antriebseinheit (DU1) umfasst, die dazu angeordnet ist, einen positiven elektrischen Strom (I_{C}) bereitzustellen, um eine Druckkraft (F1) zu erzeugen, und wobei die Antriebseinheit (DU1) angeordnet ist, einen negativen elektrischen Strom (I_{C}) bereitzustellen, um eine Zugkraft (F1) zu erzeugen.

7. Gerät (500) nach einem der Ansprüche 1 bis 6, umfassend einen Kraftsensor (FSEN1) zur Bereitstellung eines Kraftsignals (S_{F1}), das die Druckkraft (F_{FSRF1}) angibt, wobei die Steuereinheit (CNT1) angeordnet ist, um die Druckkraft (F_{SRF1}) durch Einstellen des elektrischen Stroms (I_{C}) basierend auf dem Kraftsignal (S_{F1}) zu steuern.

8. Gerät (500) nach einem der Ansprüche 1 bis 7, umfassend mindestens einen Sensor (FSEN1, ASEN1, PSEN1) zum Messen der Beschleunigung (a_{z}) der Oberflächenverarbeitungsvorrichtung (200) in der axialen Richtung (AX1) des elektromagnetischen Aktuators (100), wobei die Steuereinheit (CNT1) angeordnet ist, die Druckkraft (F_{SRF1}) durch Einstellen des elektrischen Stroms (I_{C}) basierend auf der gemessenen Beschleunigung (a_{z}) zu steuern.

9. Gerät (500) nach einem der Ansprüche 1 bis 8, umfassend mindestens einen Sensor (FSEN1, ASEN1, PSEN1) zur Messung der Beschleunigung (a_{z}) der Oberflächenverarbeitungsvorrichtung (200) in axialer Richtung (AX1) des elektromagnetischen Aktuators (100), wobei die Steuereinheit (CNT1) angeordnet ist, um eine Auswirkung der axialen Beschleunigung (a_{z}) auf die Druckkraft (F_{SRF1}) durch Einstellen des elektrischen Stroms (I_{C}) des elektromagnetischen Aktuators (100) basierend auf der gemessenen axialen Beschleunigung (a_{z}) zu kompensieren.

10. Gerät (500) nach einem der Ansprüche 1 bis 9, wobei das Gerät (500) angeordnet ist, um einen Schutzvorgang (EVADE1) auszuführen, wenn festgestellt wird, dass sich die Verschiebung (Δz_{M1}) des elektromagnetischen Aktuators (100) innerhalb einer vorbestimmten Region (MRG1) befindet, die außerhalb des zulässigen Betriebsbereichs (RNG1) liegt, wobei der Schutzvorgang (EVADE1) das Anhalten einer Bewegung des Roboters (ROBO1) und/oder das Wegbewegen des Roboters (ROBO1) von der bearbeiteten Oberfläche (SRF1) umfasst.

11. Gerät (500) nach einem der Ansprüche 1 bis 10, wobei der Roboter (ROBO1) so ausgelegt ist, dass er eine Übergangsbewegung ausführt, um die Oberflächenverarbeitungsvorrichtung (200) von einer ersten Position (x₁₆) in eine zweite Position (x₀) zu bewegen, sodass die Oberflächenverarbeitungsvorrichtung (200) keinen Kontakt mit der Oberfläche (SRF1) hat, wobei das Steuerungssystem (SYS1) der Vorrichtung (500) angeordnet ist, den elektrischen Strom (I_{C}) so zu steuern, dass der elektromagnetische Aktuator (100) während der Übergangsbewegung Bewegungen des Antriebselements (M1) des elektromagnetischen Aktuators (100) relativ zum Stator (M2) des elektromagnetischen Aktuators (100) verhindert und/oder dämpft.

12. Gerät (500) nach einem der Ansprüche 1 bis 11, wobei das Gerät (500) angeordnet ist, um das Gewicht (F_{W1}) der Oberflächenverarbeitungsvorrichtung (200) unter Verwendung eines Kraftsensors (FSEN1) zu messen.

13. Gerät (500) nach einem der Ansprüche 1 bis 12, wobei die Oberflächenverarbeitungsvorrichtung (200) eine Schleifvorrichtung ist.

14. Gerät (500) nach einem der Ansprüche 1 bis 13, wobei die Oberflächenverarbeitungsvorrichtung (200) angeordnet ist, um eine Dreh- und/oder Schwingbewegung eines Schleifkörpers (ABR1) relativ zur Oberfläche (SRF1) zu bewirken.

15. Verfahren zum Verarbeiten einer Oberfläche (SRF1) unter Verwendung eines Geräts (500), das Gerät (500) umfassend:
- eine Verarbeitungsvorrichtung (200) zur Verarbeitung einer Oberfläche (SRF1),
- einen Roboter (ROBO1), um die Oberflächenverarbeitungsvorrichtung (200) relativ zur Oberfläche (SRF1) zu bewegen, und
- einen elektromagnetischen Aktuator (100),
wobei der elektromagnetische Aktuator (100) eine oder mehrere Linearführungen (LIN1) umfasst, um einen linearen Bewegungsweg eines Bewegers (M1) des Aktuators (100) relativ zu einem Stator (M2) des Aktuators (100) zu definieren,
das Verfahren umfassend:
- Verwenden des elektromagnetischen Aktuators (100), um elektromagnetisch eine Aktuatorkraft (F1) auf die Oberflächenverarbeitungsvorrichtung (200) auszuüben, um zu bewirken, dass die Oberflächenverarbeitungsvorrichtung (200) mit einer geregelten Anpresskraft (SRF1) gegen die Oberfläche (F_{SRF1}) drückt,
wobei das Gerät (500) ferner einen Positionssensor (PSEN1) umfasst, um ein Positionssignal (S_{Z}) zu erzeugen, das eine Verschiebung (Δz_{M1}) des Bewegers (M1) des elektromagnetischen Aktuators (100) relativ zum Stator (M2) des elektromagnetischen Aktuators (100) angibt,
wobei das Verfahren ferner Folgendes umfasst:
- Steuern der Druckkraft (F_{SRF1}) durch Einstellen eines elektrischen Stroms (I_{C}) des elektromagnetischen Aktuators (100), und
- das Beibehalten des Versatzes (Δz_{M1}) des elektromagnetischen Aktuators (100) innerhalb eines vorgegebenen Bereichs (RNG1) durch Steuerung der Bewegungen des Roboters (ROBO1) basierend auf dem Positionssignal (S_{Z}).

## Revendications

1. Appareil de traitement de surface (500), comprenant :
- un dispositif de traitement de surface (200) agencé pour traiter une surface (SRF1),
- un robot (ROBO1) agencé pour déplacer le dispositif de traitement de surface (200) par rapport à la surface (SRF1), et
- un actionneur électromagnétique (100) agencé pour appliquer de manière électromagnétique une force d'actionnement (F1) au dispositif de traitement de surface (200), de manière à amener le dispositif de traitement de surface (200) à exercer une pression sur la surface (SRF1) avec une force de pression contrôlée (F_{SRF1}), **caractérisé en ce que**
l'actionneur électromagnétique (100) comprend un ou plusieurs guides linéaires (LIN1) agencés de manière à définir une trajectoire linéaire d'un élément mobile (M1) de l'actionneur (100) par rapport à un stator (M2) de l'actionneur (100), dans lequel l'appareil (500) comprenant en outre :
- une unité de commande (CNT1) configurée pour commander la force de pression (F_{SRF1}) en ajustant un courant électrique (I_{C}) de l'actionneur électromagnétique (100), et
- un capteur de position (PSEN1) agencé pour former un signal de position (S_{Z}) indiquant un déplacement (Δz_{M1}) de l'élément mobile (M1) de l'actionneur électromagnétique (100) par rapport au stator (M2) de l'actionneur électromagnétique (100),
dans lequel l'unité de commande (CNT1) est configurée pour maintenir le déplacement (Δz_{M1}) de l'actionneur électromagnétique (100) dans une plage prédéterminée (RNG1) en commandant les mouvements du robot (ROBO1) en fonction du signal de position (S_{Z}).

2. Appareil (500) selon la revendication 1, dans lequel l'actionneur électromagnétique (100) comprend des aimants permanents, qui sont agencés selon la configuration en réseau de Halbach.

3. Appareil (500) selon la revendication 1 ou 2, dans lequel l'unité de commande (CNT1) est configurée pour maintenir le déplacement (Δz_{M1}) de l'élément mobile M1 par rapport à une position centrale nominale (Δz_{M1}=0) inférieur à 5 mm.

4. Appareil (500) selon l'une quelconque des revendications 1 à 3, dans lequel l'unité de commande (CNT1) est configurée pour ajuster le courant électrique (I_{C}) de l'actionneur électromagnétique (100) en fonction d'un angle d'inclinaison (α1) du dispositif de traitement de surface (200), de manière à maintenir la force de pression (F_{SRF1}) sensiblement indépendante de l'angle d'inclinaison (α1), dans lequel l'angle d'inclinaison (α1) spécifie l'orientation (AX2) du dispositif de traitement de surface (200) par rapport à la direction (DIRG) de la gravité.

5. Appareil (500) selon l'une quelconque des revendications 1 à 4, dans lequel l'actionneur électromagnétique (100) est agencé pour fournir également une force d'actionnement de traction (F1) de manière à tirer le dispositif de traitement de surface (200) vers le robot (ROBO1).

6. Appareil (500) selon l'une quelconque des revendications 1 à 5, dans lequel l'appareil (500) est agencé pour inverser le sens de la force d'actionnement (F1) en inversant la polarité du courant électrique (I_{C}) de l'actionneur (100), dans lequel l'appareil (500) comprend une unité d'entraînement (DU1), qui est agencée pour fournir un courant électrique positif (I_{C}) afin de générer une force de poussée (F1), et dans lequel l'unité d'entraînement (DU1) est agencée pour fournir un courant électrique négatif (I_{C}) afin de générer une force de traction (F1).

7. Appareil (500) selon l'une quelconque des revendications 1 à 6, comprenant un capteur de force (FSEN1) destiné à fournir un signal de force (S_{F1}) indiquant la force de pression (F_{SRF1}), dans lequel l'unité de commande (CNT1) est agencée pour commander la force de pression (F_{SRF1}) en ajustant le courant électrique (I_{C}) en fonction du signal de force (S_{F1}).

8. Appareil (500) selon l'une quelconque des revendications 1 à 7, comprenant au moins un capteur (FSEN1, ASEN1, PSEN1) destiné à mesurer l'accélération (a_{z}) du dispositif de traitement de surface (200) dans la direction axiale (AX1) de l'actionneur électromagnétique (100), dans lequel l'unité de commande (CNT1) est agencée pour commander la force de pression (F_{SRF1}) en ajustant le courant électrique (I_{C}) en fonction de l'accélération mesurée (a_{z}).

9. Appareil (500) selon l'une quelconque des revendications 1 à 8, comprenant au moins un capteur (FSEN1, ASEN1, PSEN1) destiné à mesurer l'accélération (a_{z}) du dispositif de traitement de surface (200) dans la direction axiale (AX1) de l'actionneur électromagnétique (100), dans lequel l'unité de commande (CNT1) est agencée pour compenser un effet de l'accélération axiale (a_{z}) sur la force de pression (F_{SRF1}) en ajustant le courant électrique (I_{C}) de l'actionneur électromagnétique (100) en fonction de l'accélération axiale mesurée (a_{z}).

10. Appareil (500) selon l'une quelconque des revendications 1 à 9, dans lequel l'appareil (500) est agencé pour exécuter une opération de protection (EVADE1) lorsque le déplacement (Δz_{M1}) de l'actionneur électromagnétique (100) est détecté comme se situant dans une région prédéterminée (MRG1), qui se trouve en dehors de la plage de mouvement autorisée (RNG1), l'opération de protection (EVADE1) comprenant l'arrêt d'un mouvement du robot (ROBO1) et/ou l'éloignement du robot (ROBO1) de la surface traitée (SRF1).

11. Appareil (500) selon l'une quelconque des revendications 1 à 10, dans lequel le robot (ROBO1) est agencé pour effectuer un mouvement de transition afin de déplacer le dispositif de traitement de surface (200) d'une première position (x₁₆) vers une seconde position (x₀) de telle sorte que le dispositif de traitement de surface (200) ne soit pas en contact avec la surface (SRF1), dans lequel le système de commande (SYS1) de l'appareil (500) est agencé pour commander le courant électrique (I_{C}) de telle sorte que l'actionneur électromagnétique (100) empêche et/ou amortisse les mouvements de l'élément mobile (M1) de l'actionneur électromagnétique (100) par rapport au stator (M2) de l'actionneur électromagnétique (100) pendant le mouvement de transition.

12. Appareil (500) selon l'une quelconque des revendications 1 à 11, dans lequel l'appareil (500) est agencé pour mesurer le poids (F_{W1}) du dispositif de traitement de surface (200) en utilisant un capteur de force (FSEN1).

13. Appareil (500) selon l'une quelconque des revendications 1 à 12, dans lequel le dispositif de traitement de surface (200) est un dispositif d'abrasion.

14. Appareil (500) selon l'une quelconque des revendications 1 à 13, dans lequel le dispositif de traitement de surface (200) est agencé pour provoquer un mouvement rotatif et/ou oscillatoire d'un article abrasif (ABR1) par rapport à la surface (SRF1).

15. Procédé de traitement d'une surface (SRF1) en utilisant un appareil (500), l'appareil (500) comprenant :
- un dispositif de traitement de surface (200) destiné à traiter la surface (SRF1),
- un robot (ROBO1) destiné à déplacer le dispositif de traitement de surface (200) par rapport à la surface (SRF1), et
- un actionneur électromagnétique (100),
dans lequel l'actionneur électromagnétique (100) comprend un ou plusieurs guides linéaires (LIN1) destinés à définir une trajectoire linéaire d'un élément mobile (M1) de l'actionneur (100) par rapport à un stator (M2) de l'actionneur (100), le procédé comprenant :
- l'utilisation de l'actionneur électromagnétique (100) pour appliquer de manière électromagnétique une force d'actionnement (F1) au dispositif de traitement de surface (200), de manière à amener le dispositif de traitement de surface (200) à exercer une pression sur la surface (SRF1) avec une force de pression contrôlée (F_{SRF1}),
dans lequel l'appareil (500) comprend en outre un capteur de position (PSEN1) destiné à former un signal de position (S_{Z}) indiquant un déplacement (Δz_{M1}) de l'élément mobile (M1) de l'actionneur électromagnétique (100) par rapport au stator (M2) de l'actionneur électromagnétique (100),
dans lequel le procédé comprend en outre :
- la commande de la force de pression (F_{SRF1}) en ajustant un courant électrique (I_{C}) de l'actionneur électromagnétique (100), et
- le maintien du déplacement (Δz_{M1}) de l'actionneur électromagnétique (100) dans une plage prédéterminée (RNG1) en commandant les mouvements du robot (ROBO1) en fonction du signal de position (S_{Z}).
